(19) **Europäisches Patentamt / European Patent Office / Office européen des brevets**

(11) **EP 4 442 451 A1**

(12) # EUROPEAN PATENT APPLICATION
published in accordance with Art. 153(4) EPC

(43) Date of publication:
**09.10.2024 Bulletin 2024/41**

(21) Application number: **22910995.4**

(22) Date of filing: **12.12.2022**

(51) International Patent Classification (IPC):
**B32B 9/00** (2006.01)   **B32B 27/10** (2006.01)
**B32B 27/30** (2006.01)   **B32B 27/32** (2006.01)
**B32B 29/00** (2006.01)   **B32B 29/06** (2006.01)
**B65D 65/40** (2006.01)   **D21H 19/08** (2006.01)
**D21H 19/20** (2006.01)   **D21H 19/22** (2006.01)
**D21H 27/30** (2006.01)

(52) Cooperative Patent Classification (CPC):
**B32B 9/00; B32B 27/10; B32B 27/30; B32B 27/32;
B32B 29/00; B32B 29/06; B65D 65/40;
D21H 19/08; D21H 19/20; D21H 19/22; D21H 27/30**

(86) International application number:
**PCT/JP2022/045750**

(87) International publication number:
**WO 2023/120287 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.12.2021   JP 2021205723
20.12.2021   JP 2021205724
29.09.2022   JP 2022156016**

(71) Applicant: **Toppan Holdings Inc.
Tokyo 110-0016 (JP)**

(72) Inventors:
• **KOSHIYAMA Yoshiki**
  **Tokyo 110-0016 (JP)**
• **KAMINAGA Junichi**
  **Tokyo 110-0016 (JP)**
• **KOJIMA Yumiko**
  **Tokyo 110-0016 (JP)**
• **ISHII Rika**
  **Tokyo 110-0016 (JP)**
• **WAKABAYASHI Hiroyuki**
  **Tokyo 110-0016 (JP)**

(74) Representative: **TBK
Bavariaring 4-6
80336 München (DE)**

(54) **GAS BARRIER LAMINATE, METHOD FOR MANUFACTURING SAME, AND PACKAGING BAG**

(57)    A gas barrier laminate according to one aspect of the present disclosure is a gas barrier laminate including a paper base material, a first resin layer, a vapor-deposited layer, and a second resin layer in this order, in which the gas barrier laminate has a density of 0.9 g/cm$^3$ or higher and 1.5 g/cm$^3$ or lower, and a dimensional change percentage in a CD direction of a dimension under conditions of 40°C and 90%RH with respect to a dimension under conditions of 40°C and 20%RH of the gas barrier laminate is 0.8% or less.

*Fig.1*

## Description

### Technical Field

The present disclosure relates to a gas barrier laminate, a method for manufacturing the same, and a packaging bag.

### Background Art

In many fields of food, beverages, pharmaceuticals, chemicals and the like, packaging materials suitable for the respective contents are in use. Packaging materials are required to have a property of preventing the transmission of water vapor or the like, which causes alteration of contents (gas barrier property).

In recent years, growing environmental awareness emanating from a marine plastic waste issue or the like has increased momentum to plastic-free world. From the viewpoint of cutting the amount of plastic materials used, the use of paper instead of plastic materials is being studied in a variety of fields. For example, Patent Literature 1 discloses a gas barrier laminate in which a barrier layer is laminated on paper.

However, since water makes paper weak, there is a problem in that, when a water-based coating fluid is applied to paper, wrinkles are likely to be generated and paper is likely to tear. In addition, there is another problem in that, when wrinkles are generated in a laminate made up of resin layers formed using paper and a water-based coating fluid, in a case where a vapor-deposited layer has been formed on a resin layer of the laminate, a defect is generated in the vapor-deposited layer and the water vapor barrier property deteriorates. As a countermeasure to tearing of paper, for example, Patent Literature 2 discloses a method in which a water vapor barrier layer (resin layer) is formed by applying a water-based coating fluid by a curtain coating method.

### Citation List

### Patent Literature

[Patent Literature 1] Japanese Unexamined Patent Publication No. 2020-69783
[Patent Literature 2] International Publication No. WO 2020/203721

### Summary of Invention

### Technical Problem

(First objective)

Paper has crease retention (also referred to as dead-fold property) and thus has a characteristic of being easily processed. However, according to the present inventors' studies, it has been clarified that there is still a room for improvement since a crack is generated in a barrier layer and the gas barrier property deteriorates in a case where a sharper crease is provided to a packaging bag (pillow packaging, three-sided seal packaging and gusset packaging),

In addition, from the viewpoint of the Act on the Promotion of Effective Utilization of Resources, there is a demand for cutting the amount of a plastic material used even in a gas barrier laminate.

Therefore, a first objective of the present disclosure is to provide a gas barrier laminate for which paper is used and which has not only an initial water vapor barrier property but also a sufficient water vapor barrier property even after being folded and a packaging bag including this gas barrier laminate.

(Second objective)

In the method described in Patent Literature 2, since the coating method is limited, there are cases where it is difficult to perform coating using a conventional facility. Therefore, there is a desire for developing a method by which the occurrence of tearing of paper can be suppressed without limiting the coating method and deterioration of the water vapor barrier property can be suppressed.

Therefore, a second objective of the present disclosure is to provide a method for manufacturing a gas barrier laminate for which paper is used, by which the occurrence of tearing of paper and deterioration of the water vapor barrier property can be suppressed even in a case where a water-based coating fluid has been applied, a gas barrier laminate, and a packaging bag including this gas barrier laminate.

**Solution to Problem**

In order to achieve the above-described objectives, the present disclosure provides the following gas barrier laminate, a method for manufacturing the same, and a packaging bag. A gas barrier laminate described in the following [1] and a packaging bag in which the same gas barrier laminate is used are a first aspect of the present disclosure for achieving the above-described first objective. A gas barrier laminate described in the following [2] and a packaging bag in which the same gas barrier laminate is used are a second aspect of the present disclosure for achieving the above-described first objective. A gas barrier laminate described in the following [7] and a packaging bag in which the same gas barrier laminate is used are a third aspect of the present disclosure for achieving the above-described second objective. A gas barrier laminate described in the following [9] and a packaging bag in which the same gas barrier laminate is used are a fourth aspect of the present disclosure for achieving the above-described second objective. A method for manufacturing a gas barrier laminate described in the following [15] is a fifth aspect of the present disclosure for achieving the above-described second objective.

[1] A gas barrier laminate including a paper base material, a first resin layer, a vapor-deposited layer, and a second resin layer in this order, in which the gas barrier laminate has a density of 0.9 g/cm$^3$ or higher and 1.5 g/cm$^3$ or lower, and a dimensional change percentage in a CD direction of a dimension under conditions of 40°C and 90%RH with respect to a dimension under conditions of 40°C and 20%RH of the gas barrier laminate is 0.8% or less.

[2] A gas barrier laminate including a paper base material having a clay coat layer, a first resin layer, a vapor-deposited layer, and a second resin layer in this order, in which the clay coat layer has a thickness of 1.5 $\mu$m or more and 15 $\mu$m or less, and a dimensional change percentage in a CD direction of a dimension under conditions of 40°C and 90%RH with respect to a dimension under conditions of 40°C and 20%RH of the gas barrier laminate is 0.85% or less.

[3] The gas barrier laminate according to [1] or [2], in which the second resin layer contains a polyolefin having a polar group.

[4] The gas barrier laminate according to any one of [1] to [3], in which the second resin layer has a thickness of 2 $\mu$m or more and 10 $\mu$m or less.

[5] The gas barrier laminate according to any one of [1] to [4], in which the vapor-deposited layer has a thickness of 30 nm or more and 100 nm or less.

[6] The gas barrier laminate according to any one of [1] to [5], in which the gas barrier laminate has a thickness of 20 $\mu$m or more and 100 $\mu$m or less.

[7] A gas barrier laminate including at least a paper base material, a first resin layer, and a vapor-deposited layer in this order, in which the first resin layer contains a water-soluble resin or a water-dispersible resin, and the paper base material has an underwater elongation of 0.30% or less in an MD direction and an underwater elongation of 3.00% or less in a CD direction.

[8] The gas barrier laminate according to [7], in which the gas barrier laminate has an underwater elongation of 0.40% or less in the MD direction and an underwater elongation of 3.00% or less in the CD direction.

[9] A gas barrier laminate including at least a paper base material, a first resin layer, and a vapor-deposited layer in this order, in which the first resin layer contains a water-soluble resin or a water-dispersible resin, and the gas barrier laminate has an underwater elongation of 0.40% or less in an MD direction and an underwater elongation of 3.00% or less in a CD direction.

[10] The gas barrier laminate according to any one of [7] to [9], in which the first resin layer contains a polyolefin having a polar group or polyvinyl alcohol-based resin.

[11] The gas barrier laminate according to any one of [7] to [10], in which the gas barrier laminate includes a second resin layer on a surface of the vapor-deposited layer opposite to the first resin layer.

[12] The gas barrier laminate according to [11], in which the second resin layer contains a polyolefin having a polar group.

[13] The gas barrier laminate according to [11] or [12], in which the gas barrier laminate has an underwater elongation of 0.40% or less in the MD direction and an underwater elongation of 2.80% or less in the CD direction.

[14] The gas barrier laminate according to any one of [7] to [13], in which the first resin layer has a thickness of 0.3 $\mu$m or more and 10 $\mu$m or less.

[15] A method for manufacturing a gas barrier laminate including at least a paper base material, a first resin layer, and a vapor-deposited layer in this order, the method having a step of using a paper base material having an underwater elongation of 0.30% or less in an MD direction and an underwater elongation of 3.00% or less in a CD direction as the paper base material and applying and drying a water-based coating fluid containing a water-soluble resin or a water-dispersible resin and water onto the paper base material to form the first resin layer.

[16] The method for manufacturing a gas barrier laminate according to [15], in which the first resin layer contains a polyolefin having a polar group or polyvinyl alcohol-based resin.

[17] The method for manufacturing a gas barrier laminate according to [15] or [16], in which the gas barrier laminate includes a second resin layer on a surface of the vapor-deposited layer opposite to the first resin layer.

[18] The method for manufacturing a gas barrier laminate according to [17], in which the second resin layer contains a polyolefin having a polar group.

[19] The method for manufacturing a gas barrier laminate according to any one of [15] to [18], in which the first resin layer has a thickness of 0.3 $\mu$m or more and 10 $\mu$m or less.

[20] A packaging bag including the gas barrier laminate according to any one of [1] to [14].

[21] The packaging bag according to [20] having a folded portion.

**Advantageous Effects of Invention**

According to the first aspect and second aspect of the present disclosure, it is possible to provide a gas barrier laminate for which paper is used and which has not only an initial water vapor barrier property but also a sufficient water vapor barrier property even after being folded and a packaging bag including this gas barrier laminate. The gas barrier laminate has crease retention, which is a characteristic of paper, and contributes to cutting the amount of plastic materials used since paper is used for the gas barrier laminate.

According to the third aspect, fourth aspect and fifth aspect of the present disclosure, it is possible to provide a method for manufacturing a gas barrier laminate for which paper is used, by which the occurrence of tearing of paper and deterioration of the water vapor barrier property can be suppressed even in a case where a water-based coating fluid has been applied, a gas barrier laminate, and a packaging bag including this gas barrier laminate. The gas barrier laminate has crease retention, which is a characteristic of paper, and contributes to cutting the amount of plastic materials used since paper is used for the gas barrier laminate.

**Brief Description of Drawings**

FIG. 1 is a schematic cross-sectional view showing a gas barrier laminate according to one embodiment of the present disclosure.

FIG. 2 is a schematic cross-sectional view showing a gas barrier laminate according to one embodiment of the present disclosure.

FIG. 3 is a schematic cross-sectional view showing a gas barrier laminate according to one embodiment of the present disclosure.

FIG. 4 is a perspective view showing a packaging bag according to one embodiment of the present disclosure.

**Description of Embodiments**

Hereinafter, embodiments of the present disclosure will be described in detail with reference to drawings in some cases. However, the present disclosure is not limited to the following embodiments.

<Gas barrier laminate according to first aspect>

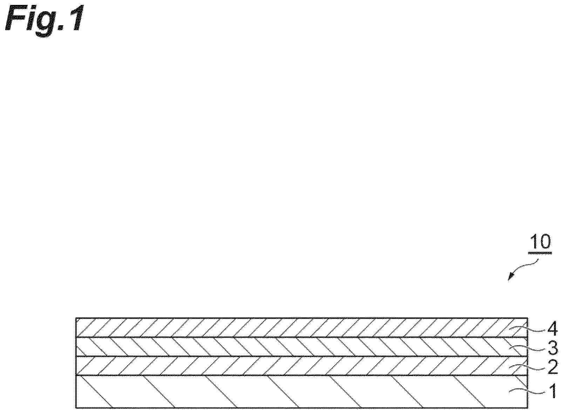

FIG. 1 is a schematic cross-sectional view showing a gas barrier laminate according to one embodiment. A gas barrier laminate 10 according to one embodiment includes a paper base material 1, a first resin layer 2, a vapor-deposited layer 3, and a second resin layer 4 in this order.

The gas barrier laminate 10 satisfies conditions of a density being 0.9 g/cm$^3$ or higher and 1.5 g/cm$^3$ or lower and a dimensional change percentage in a CD direction of the dimension under conditions of 40°C and 90%RH with respect to the dimension under conditions of 40°C and 20%RH (hereinafter, simply referred to as "dimensional change percentage" in some cases) of the gas barrier laminate 10 being 0.8% or less. This makes it possible for the gas barrier laminate 10 to have not only an initial water vapor barrier property but also a sufficient water vapor barrier property even after being folded.

The present inventors presume the reason of the above-described effect being exhibited to be as described below. It is considered that many cracks or defects are present in the vapor-deposited layer 3 due to transport scratches, scratches caused by the shift of the rear surface when the gas barrier laminate is wound in a roll shape or the like and many cracks or defects are present in the second resin layer 4 due to the volumetric contraction of a resin or the like. In addition, when the dimensional change percentage in the CD direction of the dimension under conditions of 40°C and 90%RH with respect to the dimension under conditions of 40°C and 20%RH of the gas barrier laminate 10 exceeds 0.8%, these cracks and defects become large, which leads to deterioration of the water vapor barrier property. Particularly, the cracks or defects in the second resin layer 4 are likely to become large when the second resin layer is folded, and the water vapor barrier property is likely to deteriorate. In contrast, when the dimensional change percentage is 0.8% or less, it is possible to suppress the cracks or the defects becoming large not only in the initial phase but also after the second resin layer is folded, and a favorable water vapor barrier property can be obtained. In addition, when the density of the gas barrier laminate 10 is set within the above-described range, it is possible to enhance the smoothness of the vapor-deposited layer 3. If the vapor-deposited layer 3 is uneven, the cracks or the defects are likely to become large from the unevenness as starting points when the vapor-deposited layer is folded, but this problem can be ameliorated by setting the density of the gas barrier laminate 10 within the above-described range, and a favorable water vapor barrier property can be obtained not only in the initial phase but also after the gas barrier laminate is folded.

The dimensional change percentage in the CD direction of the dimension under conditions of 40°C and 90%RH with respect to the dimension under conditions of 40°C and 20%RH of the gas barrier laminate 10 is a value measured by the following method. First, a measurement sample is produced by cutting the gas barrier laminate to a predetermined size. This sample is left to stand in a constant temperature and humidity chamber of 40°C and 20%RH for three days, and the length of the sample in the CD direction is then measured in the constant temperature and humidity chamber. Subsequently, the same sample is left to stand in a constant temperature and humidity chamber of 40°C and 90%RH for three days, and the length of the sample in the CD direction is then measured in the constant temperature and humidity chamber. The dimensional change percentage (%) in the CD direction of the dimension under conditions of 40°C and 90%RH with respect to the dimension under conditions of 40°C and 20%RH of the sample is calculated from the following expression.

(Length at 40°C and 90%RH - length at 40°C and 20%RH)/length at 40°C and 20%RH $\times$ 100

The dimensional change percentage in the CD direction of the dimension under conditions of 40°C and 90%RH with respect to the dimension under conditions of 40°C and 20%RH of the gas barrier laminate 10 needs to be 0.8% or less, but may be 0.7 or less or may be 0.65% or less from the viewpoint of making the water vapor barrier properties more favorable in the initial phase and after the gas barrier laminate is folded. In addition, the lower limit value of the dimensional change percentage in the CD direction of the dimension under conditions of 40°C and 90%RH with respect to the dimension under conditions of 40°C and 20%RH of the gas barrier laminate 10 is not particularly limited, but may be 0% or more or may be 0.1% or more. The dimensional change percentage of the gas barrier laminate 10 can be adjusted by changing, for example, the dimensional change percentage in the CD direction of the dimension under conditions of 40°C and 90%RH with respect to the dimension under conditions of 40°C and 20%RH of the paper base material, the density of the gas barrier laminate 10, the density of the paper base material, the thickness of a coat layer, which will be described below, the content of a filler in the coat layer, the basis weight of the paper base material, the fiber length and fiber diameter of the paper, the amounts of polar groups in the first and second resin layers and the like.

The density of the gas barrier laminate 10 is a value measured according to JIS P 8118. The density of the gas barrier laminate 10 needs to be 0.9 g/cm$^3$ or higher and 1.5 g/cm$^3$ or lower, but may be 0.95 g/cm$^3$ or higher, may be 1.0 g/cm$^3$ or higher or may be 1.1 g/cm$^3$ or higher from the viewpoint of making the water vapor barrier properties more favorable in the initial phase and after the gas barrier laminate is folded. In addition, the density of the gas barrier laminate 10 may be 1.4 g/cm$^3$ or lower, may be 1.3 g/cm$^3$ or lower or may be 1.2 g/cm$^3$ or lower.

The thickness of the gas barrier laminate 10 may be 20 to 100 $\mu$m, may be 30 to 80 $\mu$m or may be 40 to 60 $\mu$m. When the thickness of the gas barrier laminate 10 is within the above-described range, it is possible for the gas barrier laminate 10 to obtain a more favorable water vapor barrier property not only in the initial phase but also after the gas barrier laminate is folded.

<Gas barrier laminate according to second aspect>

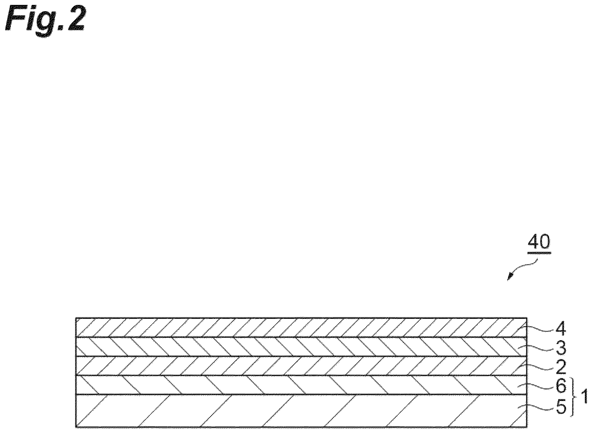

FIG. 2 is a schematic cross-sectional view showing a gas barrier laminate according to one embodiment. A gas barrier laminate 40 according to one embodiment includes a paper base material 1, a first resin layer 2, a vapor-deposited layer 3, and a second resin layer 4 in this order. The paper base material 1 includes a paper layer 5 and a clay coat layer 6. The first resin layer 2 is provided on the clay coat layer 6-side surface of the paper base material 1.

The gas barrier laminate 40 satisfies conditions of a thickness of the clay coat layer 6 being 1.5 $\mu$m or more and 15 $\mu$m or less and a dimensional change percentage in a CD direction of the dimension under conditions of 40°C and 90%RH with respect to the dimension under conditions of 40°C and 20%RH (hereinafter, simply referred to as "dimensional change percentage" in some cases) of the gas barrier laminate 40 being 0.85% or less. This makes it possible for the gas barrier laminate 40 to have not only an initial water vapor barrier property but also a sufficient water vapor barrier property even after being folded.

The present inventors presume the reason of the above-described effect being exhibited as described below. It is considered that many cracks or defects are present in the vapor-deposited layer 3 due to transport scratches, scratches caused by the shift of the rear surface when the gas barrier laminate is wound in a roll shape or the like and many cracks or defects are present in the second resin layer 4 due to the volumetric contraction of a resin or the like. In addition, when the dimensional change percentage in the CD direction of the dimension under conditions of 40°C and 90%RH with respect to the dimension under conditions of 40°C and 20%RH of the gas barrier laminate 40 exceeds 0.85%, these cracks and defects become large, which leads to deterioration of the water vapor barrier property. Particularly, the cracks or defects in the second resin layer 4 are likely to become large when the second resin layer is folded, and the water vapor barrier property is likely to deteriorate. In contrast, when the dimensional change percentage is 0.85% or less, it is possible to suppress the cracks or the defects becoming large not only in the initial phase but also after the second resin layer is folded, and a favorable water vapor barrier property can be obtained. In addition, when the thickness of the clay coat layer 6 is set within the above-described range, it is possible to enhance the smoothness of the paper base material 1, which makes it possible to enhance the smoothness of the vapor-deposited layer 3. If the vapor-deposited layer 3 is uneven, the cracks or the defects are likely to become large from the unevenness as starting points when the vapor-deposited layer is folded, but this problem can be improved by setting the thickness of the clay coat layer 6 within the above-described range, and a favorable water vapor barrier property can be obtained not only in the initial phase but also after the gas barrier laminate is folded.

The dimensional change percentage in the CD direction of the dimension under conditions of 40°C and 90%RH with respect to the dimension under conditions of 40°C and 20%RH of the gas barrier laminate 40 is a value measured by the following method. First, a measurement sample is produced by cutting the gas barrier laminate to a predetermined size. This sample is left to stand in a constant temperature and humidity chamber of 40°C and 20%RH for three days, and the length of the sample in the CD direction is then measured in the constant temperature and humidity chamber. Subsequently, the same sample is left to stand in a constant temperature and humidity chamber of 40°C and 90%RH for three days, and the length of the sample in the CD direction is then measured in the constant temperature and humidity chamber. The dimensional change percentage (%) in the CD direction of the dimension under conditions of 40°C and 90%RH with respect to the dimension under conditions of 40°C and 20%RH of the sample is calculated from the following expression.

(Length at 40°C and 90%RH - length at 40°C and 20%RH)/length at 40°C and 20%RH $\times$ 100

The dimensional change percentage in the CD direction of the dimension under conditions of 40°C and 90%RH with respect to the dimension under conditions of 40°C and 20%RH of the gas barrier laminate 40 needs to be 0.85% or less, but may be 0.8% or less, may be 0.7% or less or may be 0.65% or less from the viewpoint of making the water vapor barrier properties more favorable in the initial phase and after the gas barrier laminate is folded. In addition, the lower limit value of the dimensional change percentage in the CD direction of the dimension under conditions of 40°C and 90%RH with respect to the dimension under conditions of 40°C and 20%RH of the gas barrier laminate 40 is not particularly limited, but may be 0% or more or may be 0.1% or more. The dimensional change percentage of the gas barrier laminate 40 can be adjusted by changing, for example, the dimensional change percentage in the CD direction of the dimension under conditions of 40°C and 90%RH with respect to the dimension under conditions of 40°C and 20%RH of the paper base material, the density of the gas barrier laminate 40, the density of the paper base material, the thickness of the clay coat layer, the content of the filler in the clay coat layer, the basis weight of the paper base material, the fiber length and fiber diameter of the paper, the amounts of polar groups in the first and second resin layers and the like.

The density of the gas barrier laminate 40 may be 0.9 g/cm$^3$ or higher and 1.5 g/cm$^3$ or lower from the viewpoint of making the water vapor barrier properties more favorable in the initial phase and after the gas barrier laminated is folded. The density of the gas barrier laminate 40 may be 0.95 g/cm$^3$ or higher, may be 1.0 g/cm$^3$ or higher or may be 1.1 g/cm$^3$ or higher. In addition, the density of the gas barrier laminate 40 may be 1.4 g/cm$^3$ or lower, may be 1.3 g/cm$^3$ or lower or may be 1.2 g/cm$^3$ or lower. The density of the gas barrier laminate 40 is a value measured according to JIS P 8118.

The thickness of the gas barrier laminate 40 may be 20 to 100 $\mu$m, may be 30 to 80 $\mu$m or may be 40 to 60 $\mu$m. When the thickness of the gas barrier laminate 40 is within the above-described range, it is possible for the gas barrier laminate 40 to obtain a more favorable water vapor barrier property not only in the initial phase but also after the gas barrier laminated is folded.

<Gas barrier laminates according to third aspect, fourth aspect and fifth aspect>

A gas barrier laminate according to a third aspect of the present disclosure is a gas barrier laminate including at least a paper base material, a first resin layer, and a vapor-deposited layer in this order, in which the first resin layer contains a water-soluble resin or a water-dispersible resin, and the paper base material has an underwater elongation of 0.30% or less in an MD direction and an underwater elongation of 3.00% or less in a CD direction. According to such a gas barrier laminate, the first resin layer containing a water-soluble resin or a water-dispersible resin is provided on the paper base material having the above-described specific underwater elongations, whereby it is possible to suppress tearing of the paper base material and the generation of a wrinkle in a laminate of the paper base material and the first resin layer and to suppress deterioration of the water vapor barrier property.

A gas barrier laminate according to a fourth aspect of the present disclosure is a gas barrier laminate including at least a paper base material, a first resin layer, and a vapor-deposited layer in this order, in which the first resin layer contains a water-soluble resin or a water-dispersible resin, and the gas barrier laminate has an underwater elongation of 0.40% or less in an MD direction and an underwater elongation of 3.00% or less in a CD direction. According to such a gas barrier laminate, the first resin layer containing a water-soluble resin or a water-dispersible resin is provided, and the gas barrier laminate has the above-described specific underwater elongations, whereby it is possible to suppress tearing of the paper base material and the generation of a wrinkle in a laminate of the paper base material and the first resin layer and to suppress deterioration of the water vapor barrier property.

The above-described gas barrier laminates according to the third aspect and the fourth aspect can be both manufactured by a method for manufacturing a gas barrier laminate according to a fifth aspect. A gas barrier laminate that is manufactured by the method for manufacturing a gas barrier laminate according to a fifth aspect has the configuration(s) of the gas barrier laminate according to the third aspect and/or the gas barrier laminate according to the fourth aspect.

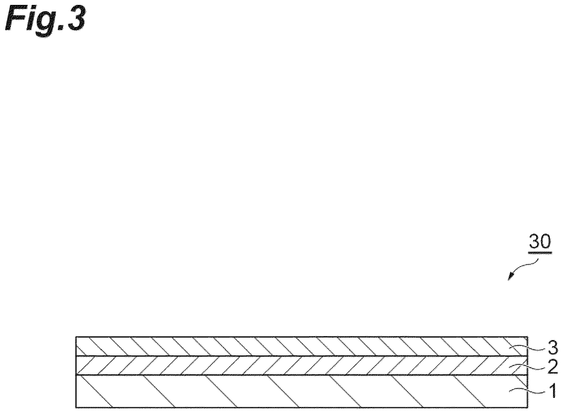

The gas barrier laminates according to the third aspect and the fourth aspect may include a paper base material 1, a first resin layer 2, a vapor-deposited layer 3, and a second resin layer 4 in this order as in the gas barrier laminate 10 shown in FIG. 1. In addition, the gas barrier laminates according to the third aspect and the fourth aspect may not include the second resin layer. That is, the gas barrier laminates according to the third aspect and the fourth aspect may be a gas barrier laminate 30 including a paper base material 1, a first resin layer 2, and a vapor-deposited layer 3 in this order as shown in FIG. 3. However, hereinafter, a case where the gas barrier laminates according to the third aspect and the fourth aspect have the structure of the gas barrier laminate 10 shown in FIG. 1 will be described.

[Method for determining MD direction and CD direction]

The MD direction (machine direction) and CD direction (cross direction) of the paper base material can be determined, for example, as described below. In a case where the paper base material is rolled paper, the long transport direction is the MD direction, and a direction perpendicular to the MD direction is the CD direction. In the paper base material, pulp fibers tend to be oriented in the MD direction, and there is thus a tendency that the dimensional change of the paper base material is larger in the CD direction than in the MD direction. In addition, the MD direction and CD direction of the gas barrier laminate are the same directions as the MD direction and CD direction of the paper base material, respectively, and, in the gas barrier laminate as well, there is a tendency that the dimensional change is larger in the CD direction than in the MD direction. Therefore, the MD directions and CD directions of the paper base material and the gas barrier laminate can be determined by the orientation direction of the fibers in the paper base material or the direction-dependent differences in dimensional change percentage of the paper base material and the gas barrier laminate. As one example of the determination method, a circular piece having a diameter of approximately 5 cm is cut out from the paper base material or the gas barrier laminate and made to float on water for approximately two minutes, and the axial direction of a curl when the circular piece has curled can be determined as the MD direction. In all of the gas barrier laminates according to the first aspect to the fifth aspect, the MD directions and CD directions of the paper base materials and the gas barrier laminates can be determined by the above-described method.

[Paper base material according to first aspect]

The paper base material 1 is not particularly limited, but it is preferable to select and use a paper base material capable of making the gas barrier laminate 10 have a density of 0.9 g/cm$^3$ or higher and 1.5 g/cm$^3$ or lower and a dimensional change percentage of 0.8% or less. The paper base material 1 may be paper containing a plant-derived pulp as a main component. Specific examples of the paper base material 1 include high-quality paper, specialty high-quality paper, coated paper, art paper, cast coated paper, imitation paper, kraft paper, glassine paper, and the like. The basis weight of the paper base material 1 may be 20 to 500 g/m$^2$ or may be 30 to 100 g/m$^2$.

The paper base material 1 may be provided with a coat layer at least on the side of the paper base material 1 in contact with the first resin layer 2. In a case where the paper base material 1 includes the coat layer, the paper base material 1 may include at least a paper layer and the coat layer. The coat layers may be provided on both surfaces of the paper base material 1. The coat layer provided is not only capable of preventing infiltration of the first resin layer 2 into the paper, but also capable of playing a role of a sealer that fills paper unevenness and capable of uniformly forming the first resin layer 2 with no defects. In the coat layer, for example, a variety of copolymers such as a styrene/butadiene-based copolymer, a styrene/acrylic copolymer and an ethylene/vinyl acetate-based copolymer, a polyvinyl alcohol-based resin, a cellulose-based resin, paraffin (WAX) or the like may be used as a binder resin, and clay, kaolin, calcium carbonate, talc, mica or the like may be contained as a filler. The coat layer may be a clay coat layer containing at least clay as a filler.

In a case where the paper base material 1 includes the coat layer, the thickness of the coat layer may be 1.5 $\mu$m or more and 15 $\mu$m or less. The thickness of the coat layer may be 1.8 $\mu$m or more, may be 3 $\mu$m or more, may be 5 $\mu$m or more or may be 6 $\mu$m or more. The thickness of the coat layer may be 12 $\mu$m or less or may be 10 $\mu$m or less. When the thickness of the coat layer is within the above-described range, it is possible for the gas barrier laminate 10 to obtain a more favorable water vapor barrier property not only in the initial phase but also after the gas barrier laminate is folded.

The thickness of the paper base material 1 may be 20 to 100 $\mu$m, may be 30 to 80 $\mu$m or may be 40 to 60 $\mu$m. When the thickness of the paper base material 1 is within the above-described range, it is possible for the gas barrier laminate 10 to obtain a more favorable water vapor barrier property not only in the initial phase but also after the gas barrier laminate is folded.

The percentage of the thickness of the coat layer occupying the thickness of the paper base material 1 may be 3% to 25% or may be 5% to 20%. When this percentage is within the above-described range, it is possible for the gas barrier laminate 10 to obtain a more favorable water vapor barrier property not only in the initial phase but also after the gas barrier laminate is folded.

The dimensional change percentage in the CD direction of the dimension under conditions of 40°C and 90%RH with respect to the dimension under conditions of 40°C and 20%RH of the paper base material 1 may be 0.8% or less, may be 0.7% or less or may be 0.6% or less. The dimensional change percentage of the gas barrier laminate 10 is significantly affected by the dimensional change percentage of the paper base material 1. Therefore, when the dimensional change percentage of the paper base material 1 is set to 0.8% or less, it is easy to adjust the dimensional change percentage of the gas barrier laminate 10 to 0.8% or less. In addition, the lower limit value of the dimensional change percentage in the CD direction of the dimension under conditions of 40°C and 90%RH with respect to the dimension under conditions of 40°C and 20%RH of the paper base material 1 is not particularly limited and may be 0% or more or may be 0.1% or more. The dimensional change percentage of the paper base material 1 can be measured by the same method as for the dimensional change percentage of the gas barrier laminate.

The density of the paper base material 1 may be 0.9 g/cm$^3$ or higher and 1.5 g/cm$^3$ or lower. The density of the gas barrier laminate 10 is significantly affected by the density of the paper base material 1. Therefore, when the density of the paper base material 1 is set to 0.9 g/cm$^3$ or higher and 1.5 g/cm$^3$ or lower, it is easy to adjust the density of the gas barrier laminate 10 to 0.9 g/cm$^3$ or higher and 1.5 g/cm$^3$ or lower. In addition, the density of the paper base material 1 may be 0.95 g/cm$^3$ or higher, may be 1.0 g/cm$^3$ or higher or may be 1.1 g/cm$^3$ or higher. In addition, the density of the paper base material 1 may be 1.4 g/cm$^3$ or lower, may be 1.3 g/cm$^3$ or lower or may be 1.2 g/cm$^3$ or lower. When the density of the paper base material 1 is set to 0.9 g/cm$^3$ or higher, it is possible to enhance the smoothness of the paper base material 1 and thereby enhance the smoothness of the vapor-deposited layer 3. As a result, it is possible for the gas barrier laminate 10 to obtain a more favorable water vapor barrier property not only in the initial phase but also after the gas barrier laminate is folded. In addition, when the density of the paper base material 1 is set to 1.5 g/cm$^3$ or lower, it is possible to form an appropriate void between the fibers and to relax stress that is applied to the paper base material 1 when the gas barrier laminate is folded. As a result, it is possible to suppress cracks or defects in the vapor-deposited layer 3 becoming large when the gas barrier laminate is folded, and it is possible for the gas barrier laminate 10 to obtain a more favorable water vapor barrier property not only in the initial phase but also after the gas barrier laminate is folded. The density of the paper base material 1 can be measured by the same method as for the density of the gas barrier laminate.

The weight of the paper is preferably 50 mass% or more, more preferably 70 mass% or more and still more preferably 80 mass% or more based on the entire gas barrier laminate. When the weight of the paper is 50 mass% or more based on the entire gas barrier laminate, it is possible to sufficiently cut the amount of plastic materials used and to produce the entire gas barrier laminate with paper, and the recyclability is excellent.

[Paper base material according to second aspect]

As the paper base material 1, a paper base material having the clay coat layer 6 with a thickness of 1.5 to 15 $\mu$m is used. The paper base material 1 may include the paper layer 5 and the clay coat layer 6. The paper layer 5 may be paper containing a plant-derived pulp as a main component. Specific examples of the paper base material 1 or the paper layer 5 include high-quality paper, specialty high-quality paper, coated paper, art paper, cast coated paper, imitation paper, kraft paper, glassine paper, and the like. The basis weight of the paper base material 1 may be 20 to 500 g/m$^2$ or may be 30 to 100 g/m$^2$.

The clay coat layer 6 is provided at least on the side of the paper base material 1 in contact with the first resin layer 2. The clay coat layers 6 may be provided on both surfaces of the paper base material 1. The clay coat layer 6 provided is not only capable of preventing infiltration of the first resin layer 2 into the paper layer 5, but also capable of playing a role of a sealer that fills paper unevenness and capable of uniformly forming the first resin layer 2 with no defects. In the clay coat layer 6, at least clay is contained as a filler. In the clay coat layer 6, for example, a variety of copolymers such as a styrene/butadiene-based copolymer, a styrene/acrylic copolymer and an ethylene/vinyl acetate-based copolymer, a polyvinyl alcohol-based resin, a cellulose-based resin, paraffin (WAX) or the like may be contained as a binder resin. In the clay coat layer 6, kaolin, calcium carbonate, talc, mica or the like may be further contained as a filler other than the clay.

The thickness of the clay coat layer 6 may be 1.5 μm or more and 15 μm or less. The thickness of the clay coat layer 6 may be 1.8 μm or more, may be 3 μm or more, may be 5 μm or more or may be 6 μm or more. The thickness of the clay coat layer 6 may be 12 μm or less or may be 10 μm or less. When the thickness of the clay coat layer 6 is within the above-described range, it is possible for the gas barrier laminate 40 to obtain a more favorable water vapor barrier property not only in the initial phase but also after the gas barrier laminate is folded.

The thickness of the paper base material 1 (the total thickness of the paper layer 5 and the clay coat layer 6) may be 20 to 100 μm, may be 30 to 80 μm or may be 40 to 60 μm. When the thickness of the paper base material 1 is within the above-described range, and the thickness of the clay coat layer 6 is within the above-described range, it is possible for the gas barrier laminate 40 to obtain a more favorable water vapor barrier property not only in the initial phase but also after the gas barrier laminate is folded.

The percentage of the thickness of the clay coat layer 6 occupying the thickness of the paper base material 1 (the total thickness of the paper layer 5 and the clay coat layer 6) may be 3% to 25% or may be 5% to 20%. When this percentage is within the above-described range, it is possible for the gas barrier laminate 40 to obtain a more favorable water vapor barrier property not only in the initial phase but also after the gas barrier laminate is folded.

The dimensional change percentage in the CD direction of the dimension under conditions of 40°C and 90%RH with respect to the dimension under conditions of 40°C and 20%RH of the paper base material 1 may be 0.85% or less, may be 0.8% or less, may be 0.7% or less or may be 0.6% or less. The dimensional change percentage of the gas barrier laminate 40 is significantly affected by the dimensional change percentage of the paper base material 1. Therefore, when the dimensional change percentage of the paper base material 1 is set to 0.85% or less, it is easy to adjust the dimensional change percentage of the gas barrier laminate 40 to 0.85% or less. In addition, the lower limit value of the dimensional change percentage in the CD direction of the dimension under conditions of 40°C and 90%RH with respect to the dimension under conditions of 40°C and 20%RH of the paper base material 1 is not particularly limited and may be 0% or more or may be 0.1% or more. The dimensional change percentage of the paper base material 1 can be measured by the same method as for the dimensional change percentage of the gas barrier laminate.

The density of the paper base material 1 according to the second aspect may be the same as the density of the paper base material 1 according to the first aspect.

The weight of the paper base material 1 according to the second aspect may be the same as the weight of the paper base material 1 according to the first aspect.

[Paper base materials according to third aspect, fourth aspect and fifth aspect]

As the paper base material 1, a paper base material having an underwater elongation of 0.30% or less in the MD direction (machine direction) and an underwater elongation of 3.00% or less in the CD direction (cross direction) can be used. In the present specification, the underwater elongation of the paper base material 1 is a value that is calculated by the following formula in which L1 (mm) represents the length of the paper base material 1 in the MD direction or CD direction in a normal state and L2 (mm) represents the length of the paper base material 1 in the MD direction or CD direction after being immersed in water for five minutes.

$$\text{Underwater elongation } (\%) = (L2 - L1)/L1 \times 100$$

The underwater elongation of the paper base material 1 in the MD direction may be 0.30% or less, 0.25% or less, 0.20% or less, 0.15% or less or 0.10% or less. The lower limit value of the underwater elongation of the paper base material 1 in the MD direction is not particularly limited and may be, for example, -0.30% or more, -0.25% or more, -0.20% or more, -0.15% or more or -0.10% or more. When the underwater elongation of the paper base material 1 in the MD direction is 0.30% or less, even in a case where a water-based coating fluid has been applied to the paper base material 1, the paper base material 1 is less likely to be stretched or loosened in the MD direction, and the occurrence of tearing of paper can be suppressed.

The underwater elongation of the paper base material 1 in the CD direction may be 3.00% or less, 2.70% or less, 2.00% or less, 1.80% or less or 1.00% or less. The lower limit value of the underwater elongation of the paper base material 1 in the CD direction is not particularly limited and may be, for example, 0% or more. When the underwater elongation of the paper base material 1 in the CD direction is 3.00% or less, it is possible to suppress the generation of a wrinkle in a laminate of the paper base material 1 and the first resin layer 2 even in a case where the first resin layer 2 has been formed on the paper base material 1. When the generation of a wrinkle in the laminate of the paper base material 1 and the first resin layer 2 is suppressed, it is possible to suppress the generation of a defect in the vapor-deposited layer 3 and the second resin layer 4 that are formed on the laminate, and it is possible to suppress deterioration of a water vapor barrier property in a gas barrier laminate to be obtained.

As the paper base material 1, it is preferable to select and use a paper base material satisfying the above-described underwater elongation conditions. The paper base material 1 may be paper containing a plant-derived pulp as a main component. Specific examples of the paper base material 1 include high-quality paper, specialty high-quality paper, coated paper, art paper, cast coated paper, imitation paper, kraft paper, glassine paper, and the like. The basis weight of the paper base material 1 may be 20 to 500 $g/m^2$ or may be 30 to 100 $g/m^2$.

The paper base material 1 may be provided with a coat layer at least on the side of the paper base material 1 in contact with the first resin layer 2. In a case where the paper base material 1 includes the coat layer, the paper base material 1 may include at least a paper layer and the coat layer. The coat layers may be provided on both surfaces of the paper base material 1. The coat layer provided is not only capable of preventing infiltration of the first resin layer 2 into the paper, but also capable of playing a role of a sealer that fills paper unevenness and capable of uniformly forming the first resin layer 2 with no defects. In the coat layer, for example, a variety of copolymers such as a styrene/butadiene-based copolymer, a styrene/acrylic copolymer and an ethylene/vinyl acetate-based copolymer, a polyvinyl alcohol-based resin, a cellulose-based resin, paraffin (WAX) or the like may be used as a binder resin, and clay, kaolin, calcium carbonate, talc, mica or the like may be contained as a filler. The coat layer may be a clay coat layer containing at least clay as a filler.

In a case where the paper base material 1 includes the coat layer, the thickness of the coat layer may be 1.5 $\mu$m or more and 15 $\mu$m or less. The thickness of the coat layer may be 1.8 $\mu$m or more, may be 3 $\mu$m or more, may be 5 $\mu$m or more or may be 6 $\mu$m or more. The thickness of the coat layer may be 12 $\mu$m or less or may be 10 $\mu$m or less. When the thickness of the coat layer is within the above-described range, the gas barrier laminate 10 is capable of suppressing the occurrence of tearing of paper and deterioration of the water vapor barrier property even in a case where a water-based coating fluid has been applied thereto and is capable of obtaining a more favorable water vapor barrier property not only in the initial phase but also after the gas barrier laminate is folded.

The thickness of the paper base material 1 may be 20 to 100 $\mu$m, may be 30 to 80 $\mu$m or may be 40 to 60 $\mu$m. When the thickness of the paper base material 1 is within the above-described range, the gas barrier laminate 10 is capable of suppressing the occurrence of tearing of paper and deterioration of the water vapor barrier property even in a case where a water-based coating fluid has been applied thereto and is capable of obtaining a more favorable water vapor barrier property not only in the initial phase but also after the gas barrier laminate is folded.

The percentage of the thickness of the coat layer occupying the thickness of the paper base material 1 may be 3% to 25% or may be 5% to 20%. When this percentage is within the above-described range, the gas barrier laminate 10 is capable of suppressing the occurrence of tearing of paper and deterioration of the water vapor barrier property even in a case where a water-based coating fluid has been applied thereto and is capable of obtaining a more favorable water vapor barrier property not only in the initial phase but also after the gas barrier laminate is folded.

The weight of the paper is preferably 50 mass% or more, more preferably 70 mass% or more and still more preferably 80 mass% or more based on the entire gas barrier laminate. When the weight of the paper is 50 mass% or more based on the entire gas barrier laminate, it is possible to sufficiently cut the amount of plastic materials used and to produce the entire gas barrier laminate with paper, and the recyclability is excellent.

The weights of the paper base materials 1 according to the third aspect, the fourth aspect and the fifth aspect may be the same as the weight of the paper base material 1 according to the first aspect.

[First resin layers according to first aspect and second aspect]

The first resin layer 2 is provided on the surface of the paper base material 1 and is provided to improve the adhesion between the paper base material 1 and the vapor-deposited layer 3 to be described below or improve the gas barrier property of the gas barrier laminate. In the gas barrier laminate according to the second aspect, the first resin layer 2 is provided on the clay coat layer 6-side surface of the paper base material 1. Even in the gas barrier laminate according to the first aspect, the first resin layer 2 may be provided on the coat layer-side surface of the paper base material 1 in a case where the paper base material 1 includes the coat layer. The first resin layer 2 is also referred to as an anchor coat layer. The first resin layer 2 may contain a polyolefin having a polar group. When containing a polyolefin having a polar group, the first resin layer 2 has excellent flexibility, is capable of suppressing the fracture of the vapor-deposited layer to be described below after the gas barrier laminate is bent (folded) and is capable of improving the adhesion between the first resin layer and the vapor-deposited layer. Furthermore, when the first resin layer contains a polyolefin having a polar group, it is possible to form a dense film due to the crystallinity of the polyolefin, and a water vapor barrier property develops. The water vapor barrier property develops due to the crystallinity of the polyolefin, and adhesion to the vapor-deposited layer develops due to the polar group.

The polyolefin having a polar group may have at least one selected from a carboxyl group, a salt of a carboxyl group, a carboxylic acid anhydride group and a carboxylic acid ester.

As the polyolefin having a polar group, a polyolefin obtained by copolymerizing an unsaturated carboxylic acid (an unsaturated compound having a carboxyl group such as acrylic acid, methacrylic acid or maleic anhydride) or an unsaturated carboxylic acid ester with ethylene or propylene, a salt obtained by neutralizing carboxylic acid with a basic compound or the like may be used, and, additionally, a polyolefin copolymerized with vinyl acetate, an epoxy-based compound, a chlorine-based compound, an urethane-based compound, a polyamide-based compound or the like or the like may also be used.

Specific examples of the polyolefin having a polar group include copolymers of an acrylic acid ester and maleic anhydride, ethylene-vinyl acetate copolymers, ethylene-glycidyl methacrylate copolymers and the like.

The first resin layer 2 may contain a different component other than the polyolefin having a polar group. Examples of the different component include polyolefins other than the polyolefin having a polar group, a silane coupling agent, organic titanate, polyacrylic components, polyesters, polyurethanes, polycarbonates, polyureas, polyamides, polyimides, melamine, phenols and the like.

The content of the polyolefin having a polar group in the first resin layer 2 may be, for example, 50 mass% or more, may be 70 mass% or more, may be 90 mass% or more or may be 100 mass%.

The thickness of the first resin layer 2 may be, for example, 0.5 $\mu$m or more, may be 1 $\mu$m or more or may be 2 $\mu$m or more and may be 20 $\mu$m or less, may be 10 $\mu$m or less or may be 5 $\mu$m or less. When the thickness of the first resin layer 2 is 0.5 $\mu$m or more, it is possible to efficiently fill the above-described unevenness of the paper base material and to uniformly laminate the vapor-deposited layer to be described below. In addition, when the thickness of the first resin layer 2 is 20 $\mu$m or less, it is possible to uniformly laminate the vapor-deposited layer while suppressing the cost.

Examples of a solvent that is contained in a coating liquid for the first resin layer 2 include water, methyl alcohol, ethyl alcohol, isopropyl alcohol, n-propyl alcohol, n-butyl alcohol, n-pentyl alcohol, dimethyl sulfoxide, dimethyl formamide, dimethyl acetamide, toluene, hexane, heptane, cyclohexane, acetone, methyl ethyl ketone, diethyl ether, dioxane, tetrahydrofuran, ethyl acetate, butyl acetate and the like. One of these solvents may be used singly or two or more thereof may be jointly used. Among them, methyl alcohol, ethyl alcohol, isopropyl alcohol, toluene, ethyl acetate, methyl ethyl ketone and water are preferable from the viewpoint of the characteristics. In addition, methyl alcohol, ethyl alcohol, isopropyl alcohol and water are preferable from the viewpoint of the environment.

As a method for providing the first resin layer 2, the first resin layer can be obtained by applying and drying a coating liquid containing the polyolefin having a polar group, the solvent and the like onto the paper base material. From the viewpoint of preventing blocking, the polyolefin having a polar group in the coating liquid preferably has a large particle diameter such that the contact area becomes small. The particle diameter is not particularly limited and, specifically, may be 1 nm or more or may be 0.1 $\mu$m or more and may be 1 $\mu$m or less, may be 0.7 $\mu$m or less or may be 0.5 $\mu$m or less.

[First resin layers according to third aspect, fourth aspect and fifth aspect]

The first resin layer 2 is provided on the surface of the paper base material 1 and is provided to improve the adhesion between the paper base material 1 and the vapor-deposited layer 3 to be described below or improve the gas barrier property of the gas barrier laminate. The first resin layer is also referred to as an anchor coat layer.

The first resin layer 2 contains a water-soluble resin or a water-dispersible resin. The first resin layer 2 may contain a polyolefin having a polar group, which is a water-dispersible resin, or a polyvinyl alcohol-based resin, which is a water-soluble resin.

In a case where the first resin layer 2 contains a polyolefin having a polar group, the first resin layer 2 has excellent flexibility, is capable of suppressing the fracture of the vapor-deposited layer 3 to be described below after the gas barrier laminate is bent (folded) and is capable of improving the adhesion between the first resin layer 2 and the vapor-deposited layer 3. Furthermore, when the first resin layer contains a polyolefin having a polar group, it is possible to form a dense film due to the crystallinity of the polyolefin, and a water vapor barrier property develops. The water vapor barrier property develops due to the crystallinity of the polyolefin, and adhesion to the vapor-deposited layer 3 develops due to the polar group.

As the polyolefin having a polar group in the third aspect, the fourth aspect and the fifth aspect, the same polyolefin as the polyolefin having a polar group in the first aspect and the second aspect can be used.

On the other hand, in a case where the first resin layer 2 contains a polyvinyl alcohol-based resin, since the polyvinyl alcohol-based resin has a polar group (hydroxyl group) and this polar group is likely to bond to a metal, such as aluminum, in the vapor-deposited layer 3, it is possible to facilitate improvement in the adhesion between the vapor-deposited layer 3 and the first resin layer 2. In addition, when the first resin layer 2 contains a polyvinyl alcohol-based resin, it is possible to improve the oxygen barrier property of the gas barrier laminate.

The degree of polymerization of the polyvinyl alcohol-based resin is preferably 300 or higher and 1700 or lower. When the degree of polymerization is 300 or higher, the barrier property or bending resistance of the gas barrier laminate becomes favorable, and it is possible to suppress the fracture of the vapor-deposited layer 3 after the gas barrier laminate is bent (folded). In addition, when the degree of polymerization is 1700 or lower, the viscosity of the coating liquid of the polyvinyl alcohol-based resin becomes low, and the applicability becomes favorable.

The polyvinyl alcohol-based resin is a resin containing vinyl alcohol as a configuration unit, and examples of the polyvinyl alcohol-based resin include completely saponified polyvinyl alcohol resins, partially saponified polyvinyl alcohol resins, modified polyvinyl alcohol resins and ethylene-vinyl alcohol copolymer resins.

The first resin layer 2 may also contain both a water-soluble resin and a water-dispersible resin and may also contain both a polyolefin having a polar group and a polyvinyl alcohol-based resin.

The first resin layer 2 may contain a different component other than the water-soluble or water-dispersible resin. Examples of the different component include polyolefins other than the polyolefin having a polar group, a silane coupling agent, organic titanate, polyacrylic components, polyesters, polyurethanes, polycarbonates, polyureas, polyamides, polyimides, melamine, phenols and the like.

The content of the water-soluble or water-dispersible resin in the first resin layer 2 may be, for example, 50 mass% or more, may be 70 mass% or more, may be 90 mass% or more or may be 100 mass%.

The thickness of the first resin layer 2 may be, for example, 0.3 $\mu$m or more, may be 0.5 $\mu$m or more, may be 1 $\mu$m or more or may be 2 $\mu$m or more and may be 20 $\mu$m or less, may be 10 $\mu$m or less or may be 5 $\mu$m or less. When the thickness of the first resin layer 2 is 0.3 $\mu$m or more, it is possible to efficiently fill the above-described unevenness of the paper base material and to uniformly laminate the vapor-deposited layer to be described below. In addition, when the thickness of the first resin layer 2 is 20 $\mu$m or less, it is possible to more sufficiently suppress the occurrence of tearing of the paper base material 1 and the generation of a wrinkle in the laminate of the paper base material 1 and the first resin layer 2 and to uniformly laminate the vapor-deposited layer while suppressing the cost.

[Vapor-deposited layers according to first aspect to fifth aspect]

The vapor-deposited layer 3 is a layer obtained by the vapor deposition of a metal or an inorganic compound. The vapor-deposited layer may be a layer obtained by vapor-depositing aluminum or may be a layer containing aluminum oxide (AlO$_x$), silicon oxide (SiO$_x$) or the like.

The thickness of the vapor-deposited layer 3 may be set as appropriate depending on the intended use, but is preferably 10 to 300 nm and more preferably 30 to 100 nm. When the thickness of the vapor-deposited layer 3 is set to 10 nm or more, it is easy to make the vapor-deposited layer 3 sufficiently continuous, and, when the thickness is set to 300 nm or less, it is possible to sufficiently suppress the generation of a curl or a crack, and it is easy to achieve sufficient gas barrier performance or flexibility. In addition, when the thickness of the vapor-deposited layer is set to 30 nm or more and 100 nm or less, the vapor-deposited layer is less likely to fracture, and it is possible to obtain a sufficient water vapor barrier property even after the gas barrier laminate is folded.

The vapor-deposited layer 3 is preferably formed by vacuum film-forming means from the viewpoint of water vapor and oxygen barrier performance or film uniformity. As the film-forming means, there are well-known methods such as a vacuum vapor deposition method, a sputtering method and a chemical vapor deposition method (CVD method), but a vacuum vapor deposition method is preferable since the film-forming rate is fast and the productivity is high. In addition, as the vacuum vapor deposition method, means for forming a film by particularly electron beam heating is effective since it is easy to control the film-forming rate with the irradiation area, the electron beam current or the like or a material to be vapor-deposited can be heated or cooled within a short period of time.

[Second resin layers according to first aspect to fifth aspect]

The second resin layer 4 is provided on the surface of the vapor-deposited layer 3 so as to come into contact with the vapor-deposited layer 3. The second resin layer is also referred to as an overcoat layer. The second resin layer may contain a polyolefin having a polar group.

The polyolefin having a polar group may have at least one selected from a carboxyl group, a salt of a carboxyl group, a carboxylic acid anhydride group and a carboxylic acid ester.

As the polyolefin having a polar group, a polyolefin obtained by copolymerizing an unsaturated carboxylic acid (an unsaturated compound having a carboxyl group such as acrylic acid or methacrylic acid) or an unsaturated carboxylic acid ester with ethylene or propylene, a salt obtained by neutralizing carboxylic acid with a basic compound or the like may be used, and, additionally, a polyolefin copolymerized with vinyl acetate, an epoxy-based compound, a chlorine-based compound, an urethane-based compound, a polyamide-based compound or the like or the like may also be used.

Specific examples of the polyolefin having a polar group include copolymers of an acrylic acid ester and maleic anhydride, ethylene-vinyl acetate copolymers, ethylene-glycidyl methacrylate copolymers and the like.

When containing the polyolefin having a polar group, the second resin layer 4 has excellent flexibility, is capable of suppressing the fracture of the vapor-deposited layer after the gas barrier laminate is bent (folded) and has excellent adhesion to the vapor-deposited layer. Furthermore, when the second resin layer contains the polyolefin having a polar group, it is possible to form a dense film due to the crystallinity of the polyolefin, and a water vapor barrier property develops. In addition, when the second resin layer has a polar group, the adhesion to the vapor-deposited layer develops. In addition, when containing the polyolefin having a polar group, the second resin layer 4 is also capable of playing a role as a heat sealing layer, which eliminates the necessity of providing a separate heat sealing layer.

The second resin layer 4 may contain a different component other than the polyolefin having a polar group. Examples of the different component include a silane coupling agent, organic titanate, polyacrylic components, polyesters, polyurethanes, polycarbonates, polyureas, polyamides, polyolefin-based emulsions, polyimides, melamine, phenols and the like.

The content of the polyolefin having a polar group in the second resin layer 4 may be, for example, 50 mass% or more, may be 70 mass% or more, may be 90 mass% or more or may be 100 mass%.

The thickness of the second resin layer 4 may be, for example, 0.05 $\mu$m or more, may be 0.5 $\mu$m or more, may be 1 $\mu$m or more or may be 2 $\mu$m or more and may be 20 $\mu$m or less, may be 10 $\mu$m or less or may be 5 $\mu$m or less. When the thickness of the second resin layer 4 is 0.05 $\mu$m or more, the second resin layer is capable of sufficiently exhibiting the above-described role as a heat sealing layer. In addition, when the thickness of the second resin layer 4 is 20 $\mu$m or less, it is possible to sufficiently exhibit the adhesion to the vapor-deposited layer or the barrier property while suppressing the cost. In addition, when the thickness of the second resin layer 4 is set to 2 $\mu$m or more and 10 $\mu$m or less, the vapor-deposited layer is less likely to fracture, and it is possible to obtain a sufficient water vapor barrier property even after the gas barrier laminate is folded.

In the gas barrier laminate 10, in a case where the polyolefin having a polar group is contained in the second resin layer 4, the thickness of the second resin layer 4 is set to 2 $\mu$m or more and 10 $\mu$m or less, and the thickness of the vapor-deposited layer 3 is set to 30 nm or more and 100 nm or less, the effect of making the vapor-deposited layer 3 less likely to fracture and making it possible to obtain a sufficient water vapor barrier property even after the gas barrier laminate is folded is particularly significantly exhibited.

Examples of a solvent that is contained in a coating liquid for the second resin layer 4 include water, methyl alcohol, ethyl alcohol, isopropyl alcohol, n-propyl alcohol, n-butyl alcohol, n-pentyl alcohol, dimethyl sulfoxide, dimethyl formamide, dimethyl acetamide, toluene, hexane, heptane, cyclohexane, acetone, methyl ethyl ketone, diethyl ether, dioxane, tetrahydrofuran, ethyl acetate, butyl acetate and the like. One of these solvents may be used singly or two or more thereof may be jointly used. Among them, methyl alcohol, ethyl alcohol, isopropyl alcohol, toluene, ethyl acetate, methyl ethyl ketone and water are preferable from the viewpoint of the characteristics. In addition, methyl alcohol, ethyl alcohol, isopropyl alcohol and water are preferable from the viewpoint of the environment.

In the gas barrier laminates according to the first aspect and the second aspect, as a method for providing the second resin layer 4, the second resin layer can be obtained by applying and drying the above-described coating liquid containing the polyolefin having a polar group, the solvent and the like onto the vapor-deposited layer. The melting point of the polyolefin having a polar group in the coating liquid is preferably 70°C to 160°C and more preferably 80°C to 120°C. When the melting point of the polyolefin having a polar group is low, there is a merit in that the starting temperature at the time of heat sealing can be set to be low. When the melting point of the polyolefin having a polar group is high, there is an increasing concern of blocking under a high-temperature environment. From the viewpoint of preventing blocking, the particle diameter is preferably large such that the contact area becomes small. The particle diameter is not particularly limited and, specifically, may be 1 nm or more or may be 0.1 $\mu$m or more and may be 1 $\mu$m or less, may be 0.7 $\mu$m or less or may be 0.5 $\mu$m or less.

In the gas barrier laminates according to the first aspect and the second aspect, the polyolefins having a polar group that are contained in the first resin layer 2 and the second resin layer 4, respectively, may be the same as each other or may be different from each other, but are preferably the same as each other in consideration of the easiness in manufacturing or the like.

[Gas barrier laminates according to third aspect, fourth aspect and fifth aspect]

The gas barrier laminate 10 may have an underwater elongation of 0.40% or less in the MD direction and an underwater elongation of 3.00% or less in the CD direction. The underwater elongation of the gas barrier laminate 10 can be measured by the same method as for the underwater elongation of the paper base material 1.

The underwater elongation of the gas barrier laminate 10 in the MD direction may be 0.35% or less, 0.30% or less, 0.25% or less, 0.20% or less or 0.15% or less. The lower limit value of the underwater elongation of the gas barrier laminate 10 in the MD direction is not particularly limited and may be, for example, -0.30% or more, -0.25% or more, -0.20% or more, -0.15% or more or -0.10% or more. When the underwater elongation of the gas barrier laminate 10 in the MD direction is 0.40% or less, it is possible to suppress the occurrence of tearing of the paper base material 1.

The underwater elongation of the gas barrier laminate 10 in the CD direction may be 3.00% or less, 2.80% or less, 2.50% or less, 2.00% or less, 1.50% or less or 1.30% or less. The lower limit value of the underwater elongation of the gas barrier laminate 10 in the CD direction is not particularly limited and may be, for example, 0% or more. When the underwater elongation of the gas barrier laminate 10 in the CD direction is 3.00% or less, it is possible to suppress the generation of a wrinkle in the laminate of the paper base material 1 and the first resin layer 2 and to suppress deterioration of the water vapor barrier property in the gas barrier laminate 10.

The thickness of the gas barrier laminate 10 may be 20 to 100 μm, may be 30 to 80 μm or may be 40 to 60 μm. When the thickness of the gas barrier laminate 10 is within the above-described range, the gas barrier laminate 10 is capable of obtaining a more favorable water vapor barrier property not only in the initial phase but also after the gas barrier laminate is folded.

[Methods for manufacturing gas barrier laminate according to third aspect, fourth aspect and fifth aspect]

A method for manufacturing the gas barrier laminate 10 according to the present embodiment has a step of applying and drying a water-based coating fluid containing a water-soluble resin or a water-dispersible resin and water onto the paper base material 1 having an underwater elongation of 0.30% or less in the MD direction and an underwater elongation of 3.00% or less in the CD direction to form the first resin layer 2 (first resin layer formation step). The method for manufacturing the gas barrier laminate 10 may have a step of forming the vapor-deposited layer 3 on the first resin layer 2 (vapor-deposited layer formation step). The method for manufacturing the gas barrier laminate 10 may have a step of forming the second resin layer 4 on the vapor-deposited layer 3 (second resin layer formation step).

[First resin layer formation step]

The first resin layer 2 can be formed by applying and drying a water-based coating fluid containing a water-soluble resin or a water-dispersible resin and water onto the paper base material 1. The water-based coating fluid may contain a solvent other than water. Examples of the solvent other than water include methyl alcohol, ethyl alcohol, isopropyl alcohol, n-propyl alcohol, n-butyl alcohol, n-pentyl alcohol, dimethyl sulfoxide, dimethyl formamide, dimethyl acetamide, toluene, hexane, heptane, cyclohexane, acetone, methyl ethyl ketone, diethyl ether, dioxane, tetrahydrofuran, ethyl acetate, butyl acetate. One of these solvents may be used singly or two or more thereof may be jointly used.

In a case where the water-based coating fluid contains a water-dispersible resin, the particle diameter of the resin is not particularly limited and may be, for example, 1 nm or more or may be 0.1 μm or more and may be 1 μm or less, 0.7 μm or less or 0.5 μm or less.

The water-based coating fluid may contain the above-described different component other than the water-soluble resin or the water-dispersible resin.

The content of a solid content (solid content concentration) containing the water-soluble resin, the water-dispersible resin and the different component in the water-based coating fluid may be 3 to 40 mass%, 5 to 30 mass% or 8 to 25 mass% based on the total amount of the water-based coating fluid from the viewpoint of maintaining favorable applicability and more sufficiently suppressing the occurrence of tearing of the paper base material 1 and the generation of a wrinkle in the laminate of the paper base material 1 and the first resin layer 2.

In a case where the water-based coating fluid contains a water-soluble resin, the content of the water-soluble resin may be 3 to 30 mass%, 5 to 20 mass% or 8 to 15 mass% based on the total amount of the water-based coating fluid from the viewpoint of maintaining favorable applicability and more sufficiently suppressing the occurrence of tearing of the paper base material 1 and the generation of a wrinkle in the laminate of the paper base material 1 and the first resin layer 2.

In a case where the water-based coating fluid contains a water-dispersible resin, the content of the water-dispersible resin may be 5 to 40 mass%, 10 to 30 mass% or 15 to 25 mass% based on the total amount of the water-based coating fluid from the viewpoint of maintaining favorable applicability and more sufficiently suppressing the occurrence of tearing of the paper base material 1 and the generation of a wrinkle in the laminate of the paper base material 1 and the first resin layer 2.

The content of water in the water-based coating fluid may be 50 to 97 mass%, 60 to 95 mass% or 70 to 90 mass% based on the total amount of the water-based coating fluid from the viewpoint of more sufficiently suppressing the occurrence of tearing of the paper base material 1 and the generation of a wrinkle in the laminate of the paper base material 1 and the first resin layer 2.

The water-based coating fluid can be applied onto the paper base material 1 by an arbitrary appropriate method. The water-based coating fluid can be applied by a wet film-forming method with, for example, a gravure coater, a dip coater, a reverse coater, a wire bar coater or a die coater. The water-based coating fluid can be applied and dried under conditions appropriately selected so that the heat-label temperature of the coated surface reaches 70°C to 150°C. In a case where the heat-label temperature of the coated surface is 70°C or higher, it is easy to suppress the occurrence of a problem such as tearing, blocking or a decrease in the degree of vacuum in the vapor-deposited layer formation step. On the other hand, when the heat-label temperature is 150°C or lower, it is easy to suppress the generation of a wrinkle or a crack in the first resin layer 2 and the consequent deterioration of the water vapor barrier property.

The application amount (wet application amount) of the water-based coating fluid at the time of being applied onto the paper base material 1 is adjusted depending on the thickness of the first resin layer 2 to be formed and the solid content concentration of the water-based coating fluid and may be, for example, 3 to 100 $g/m^2$, 5 to 80 $g/m^2$ or 8 to 60 $g/m^2$. When this application amount is 3 $g/m^2$ or more, it is possible to more sufficiently suppress deterioration of the water vapor barrier property, and, when the application amount is 100 $g/m^2$ or less, it is possible to more sufficiently suppress the occurrence of tearing of the paper base material 1.

The unfold tension per unit width of the paper base material 1 at the time of applying the water-based coating fluid onto the paper base material 1 may be 30 to 300 N/m, 50 to 200 N/m or 60 to 100 N/m. When this unfold tension is 30 N/m or more, the paper base material 1 is less likely to be loosened, and it is possible to more sufficiently suppress the occurrence of tearing, and, when the unfold tension is 300 N/m or less, it is possible to more sufficiently suppress the generation of a wrinkle in the laminate of the paper base material 1 and the first resin layer 2.

The tension per unit width of the paper base material 1 at the time of drying the water-based coating fluid applied onto the paper base material 1 (drying tension) may be 30 to 300 N/m, 50 to 200 N/m or 70 to 150 N/m. When this drying tension is 30 N/m or more, the paper base material 1 is less likely to be loosened, and it is possible to more sufficiently suppress the occurrence of tearing, and, when the drying tension is 300 N/m or less, it is possible to more sufficiently suppress the generation of a wrinkle in the laminate of the paper base material 1 and the first resin layer 2.

[Vapor-deposited layer formation step]

The vapor-deposited layer 3 is preferably formed by the vacuum film-forming means from the viewpoint of water vapor and oxygen barrier performance or film uniformity. As the film-forming means, there are well-known methods such as a vacuum vapor deposition method, a sputtering method and a chemical vapor deposition method (CVD method), but a vacuum vapor deposition method is preferable since the film-forming rate is fast and the productivity is high. In addition, as the vacuum vapor deposition method, means for forming a film by particularly electron beam heating is effective since it is easy to control the film-forming rate with the irradiation area, the electron beam current or the like or a material to be vapor-deposited can be heated or cooled within a short period of time.

[Second resin layer formation step]

The second resin layer 4 can be formed by applying and drying a coating liquid for forming the second resin layer 4 onto the vapor-deposited layer 3. In a case where the coating liquid contains a polyolefin having a polar group, the melting point of the polyolefin having a polar group in the coating liquid is preferably 70°C to 160°C and more preferably 80°C to 120°C. When the melting point of the polyolefin having a polar group is low, there is a merit in that the starting temperature at the time of heat sealing can be set to be low. When the melting point of the polyolefin having a polar group is high, since there is an increasing concern of blocking under a high-temperature environment, an anti-blocking agent may be added. The particle diameter of the polyolefin having a polar group is not particularly limited and, specifically, may be 1 nm or more or may be 0.1 $\mu$m or more and may be 1 $\mu$m or less, may be 0.7 $\mu$m or less or may be 0.5 $\mu$m or less.

In a case where the polyolefins having a polar group are contained in the first resin layer 2 and the second resin layer 4, respectively, the polyolefins having a polar group may be the same as each other or may be different from each other, but are preferably the same as each other in consideration of the easiness in manufacturing or the like.

Examples of a solvent that is contained in the coating liquid of the second resin layer 4 include water, methyl alcohol, ethyl alcohol, isopropyl alcohol, n-propyl alcohol, n-butyl alcohol, n-pentyl alcohol, dimethyl sulfoxide, dimethyl formamide, dimethyl acetamide, toluene, hexane, heptane, cyclohexane, acetone, methyl ethyl ketone, diethyl ether, dioxane, tetrahydrofuran, ethyl acetate, butyl acetate. One of these solvents may be used singly or two or more thereof may be jointly used. Among them, methyl alcohol, ethyl alcohol, isopropyl alcohol, toluene, ethyl acetate, methyl ethyl ketone and water are preferable from the viewpoint of the characteristics. In addition, methyl alcohol, ethyl alcohol, isopropyl alcohol and water are preferable from the viewpoint of the environment.

The coating liquid can be applied and dried on the vapor-deposited layer 3 by the same method as that in the first resin layer formation step.

<Packaging bags according to first aspect to fifth aspect>

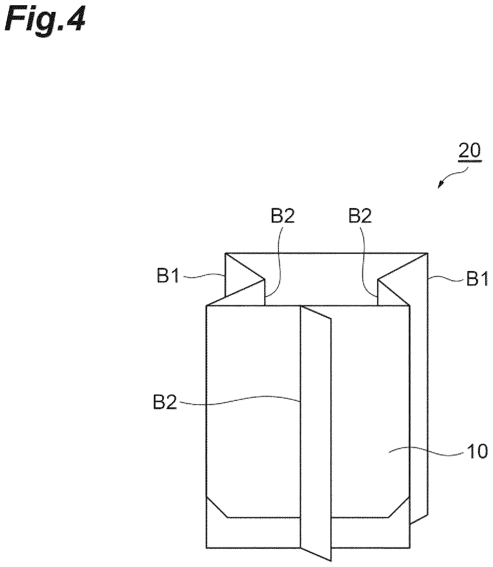

FIG. 4 is a perspective view showing a gusset bag 20 made of the gas barrier laminate 10. A packaging bag is manufactured by sealing the opening portion in the upper portion of the gusset bag 20. The gusset bag 20 has places where the gas barrier laminate 10 is folded (folded portions B1 and B2). The folded portion B1 is a place where a valley-fold is applied to the gas barrier laminate 10 when viewed from the innermost side, and, on the other hand, the folded portion B2 is a place where a mountain-fold is applied to the gas barrier laminate 10 when viewed from the innermost side. In a packaging bag according to a second aspect, the gas barrier laminate 40 is used instead of the gas barrier laminate 10. In addition, in packaging bags according to a third aspect, a fourth aspect and a fifth aspect, the gas barrier laminate 30 may be used instead of the gas barrier laminate 10.

The packaging bag may be a packaging bag obtained by folding one gas barrier laminate in half so that the right half and the left half of the second resin layer 4 face each other, then, appropriately folding the gas barrier laminate so as to form a desired shape and heat-sealing the gas barrier laminate to provide a bag shape or may be a packaging bag obtained by overlapping two gas barrier laminates so that the second resin layers 4 face each other and then heat-sealing the gas barrier laminates to provide a bag shape.

In the packaging bag according to the present embodiment, the heat seal strength may be 2 N or higher or may be 4 N or higher. The upper limit value of the heat seal strength is not particularly limited and may be, for example, 10 N or lower.

The packaging bag is capable of accommodating a content such as food or a pharmaceutical as a content. Particularly, sweets or the like are suitable to be accommodated as food. The packaging bag according to the present embodiment is capable of maintaining a high gas barrier property even when having a shape with a folded portion.

In the present embodiment, the gusset bag has been described as an example of the packaging bag; however, for example, pillow packaging, three-sided seal packaging or a standing pouch may be produced using the gas barrier laminate according to the present embodiment.

Hitherto, suitable embodiments of the present disclosure have been described, but the present disclosure is not limited to the above-described embodiments.

[Examples]

Hereinafter, the present disclosure will be described in more detail using examples, but the present disclosure is not limited to these examples.

<Production of gas barrier laminate according to first aspect>

(Example 1-1)

A water dispersion of a polyolefin containing a salt of a carboxyl group was applied (wet application amount: 15 g/m$^2$, solid content concentration: 20 mass%) with a bar coater onto a surface of a paper base material (manufactured by Fujikako Co., Ltd., trade name: SPECIAL CORMORANT, thickness: 52 $\mu$m, basis weight: 52.3 g/m$^2$, clay coat layer provided) and dried in an oven to form a first resin layer. Subsequently, Al vapor deposition was performed on the first resin layer by a vacuum vapor deposition method to form an Al vapor-deposited layer. The thickness of the Al vapor-deposited layer was 50 nm. After that, a water dispersion of a polyolefin containing a salt of a carboxyl group was applied with the bar coater onto the vapor-deposited layer and dried in the oven to form a second resin layer, whereby a gas barrier laminate was obtained. The thickness of the second resin layer was 3 $\mu$m.

(Example 1-2)

A gas barrier laminate was obtained by the same operation as in Example 1-1 except that SPECIAL CORMO S (trade name, thickness: 49 $\mu$m, basis weight: 52.3 g/m$^2$, clay coat layer provided) manufactured by Fujikako Co., Ltd. was used as the paper base material.

(Example 1-3)

A gas barrier laminate was obtained by the same operation as in Example 1-1 except that RYUUO COATE (trade name, thickness: 45 $\mu$m, basis weight: 55 g/m$^2$, clay coat layer provided) manufactured by Daio Paper Corporation was used as the paper base material.

(Example 1-4)

A gas barrier laminate was obtained by the same operation as in Example 1-1 except that a coated wrapping paper (thickness: 41 $\mu$m, basis weight: 50 g/m$^2$, clay coat layer provided) manufactured by Xianhe Co., Ltd. was used as the paper base material.

(Example 1-5)

A gas barrier laminate was obtained by the same operation as in Example 1-1 except that a coated wrapping paper (thickness: 51 $\mu$m, basis weight: 60 g/m$^2$, clay coat layer provided) manufactured by Xianhe Co., Ltd. was used as the paper base material.

(Example 1-6)

A gas barrier laminate was obtained by the same operation as in Example 1-1 except that a coated wrapping paper (thickness: 51 $\mu$m, basis weight: 60 g/m$^2$, clay coat layer provided) manufactured by Xianhe Co., Ltd. was used as the paper base material and a silica vapor-deposited layer was formed by the vacuum vapor deposition method as the vapor-deposited layer.

(Example 1-7)

A gas barrier laminate was obtained by the same operation as in Example 1-1 except that a coated wrapping paper (thickness: 51 $\mu$m, basis weight: 60 g/m$^2$, clay coat layer provided) manufactured by Xianhe Co., Ltd. was used as the paper base material and an alumina vapor-deposited layer was formed by the vacuum vapor deposition method as the vapor-deposited layer.

(Example 1-8)

A gas barrier laminate was obtained by the same operation as in Example 1-1 except that a coated wrapping paper (thickness: 51 $\mu$m, basis weight: 60 g/m$^2$, clay coat layer provided) manufactured by Xianhe Co., Ltd. was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

(Example 1-9)

A gas barrier laminate was obtained by the same operation as in Example 1-1 except that RYUUO COATE (trade name, thickness: 45 $\mu$m, basis weight: 55 g/m$^2$, clay coat layer provided) manufactured by Daio Paper Corporation was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

(Comparative Example 1-1)

A gas barrier laminate was obtained by the same operation as in Example 1-1 except that GLASSINE N (trade name, thickness: 26 $\mu$m, basis weight: 30.5 g/m$^2$, no clay coat layer provided) manufactured by Nippon Paper Industries Co., Ltd. was used as the paper base material.

(Comparative Example 1-2)

A gas barrier laminate was obtained by the same operation as in Example 1-1 except that Enza HS Wrapping Paper (trade name, thickness: 77 $\mu$m, basis weight: 60 g/m$^2$, no clay coat layer provided) manufactured by APP Group was used as the paper base material.

(Comparative Example 1-3)

A gas barrier laminate was obtained by the same operation as in Example 1-1 except that Solide Lucent (trade name, thickness: 35 $\mu$m, basis weight: 40 g/m$^2$, no clay coat layer provided) manufactured by UPM was used as the paper base material.

(Comparative Example 1-4)

A gas barrier laminate was obtained by the same operation as in Example 1-1 except that Solide Strong (trade name, thickness: 67 $\mu$m, basis weight: 60 g/m$^2$, no clay coat layer provided) manufactured by UPM was used as the paper base material.

(Comparative Example 1-5)

A gas barrier laminate was obtained by the same operation as in Example 1-1 except that Brilliant Express (trade name, thickness: 34 $\mu$m, basis weight: 40 g/m$^2$, clay coat layer provided) manufactured by UPM was used as the paper base material.

(Comparative Example 1-6)

A gas barrier laminate was obtained by the same operation as in Example 1-1 except that Brilliant Duo (trade name, thickness: 51 $\mu$m, basis weight: 62 g/m$^2$, clay coat layer provided) manufactured by UPM was used as the paper base material.

(Comparative Example 1-7)

A gas barrier laminate was obtained by the same operation as in Example 1-1 except that Brilliant (trade name, thickness: 51 $\mu$m, basis weight: 60 g/m$^2$, clay coat layer provided) manufactured by UPM was used as the paper base material.

(Comparative Example 1-8)

A gas barrier laminate was obtained by the same operation as in Example 1-1 except that Solide Lucent (trade name, thickness: 35 $\mu$m, basis weight: 40 g/m$^2$, no clay coat layer provided) manufactured by UPM was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

(Comparative Example 1-9)

A gas barrier laminate was obtained by the same operation as in Example 1-1 except that Brilliant (thickness: 51 $\mu$m, basis weight: 60 g/m$^2$, clay coat layer provided) manufactured by UPM was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

<Measurement of density>

The densities of the gas barrier laminates according to Examples 1-1 to 1-9 and Comparative Examples 1-1 to 1-9 and the paper base materials used in Examples 1-1 to 1-9 and Comparative Examples 1-1 to 1-9 were measured according to JIS P 8118. The results are shown in Tables 1 and 2.

<Measurement of dimensional change percentage>

A measurement sample was produced by cutting each of the gas barrier laminates according to Examples 1-1 to 1-9 and Comparative Examples 1-1 to 1-9 and the paper base materials used in Examples 1-1 to 1-9 and Comparative Examples 1-1 to 1-9 to size that was 150 mm in length and 20 mm in width in the CD direction. This sample was left to stand in a constant temperature and humidity chamber of 40°C and 20%RH for three days, and the length of the sample in the CD direction was then measured in the constant temperature and humidity chamber using a glass scale. Subsequently, the same sample was left to stand in a constant temperature and humidity chamber of 40°C and 90%RH for three days, and the length of the sample in the CD direction was then measured in the constant temperature and humidity chamber using the glass scale. The dimensional change percentage (%) in the CD direction of the dimension under conditions of 40°C and 90%RH with respect to the dimension under conditions of 40°C and 20%RH of the sample was calculated from the following expression. The results are shown in Tables 1 and 2.

(Length at 40°C and 90%RH - length at 40°C and 20%RH)/length at 40°C and 20%RH $\times$ 100

<Measurement of water vapor permeability>

The water vapor permeability of the gas barrier laminates according to Examples 1-1 to 1-9 and Comparative Examples 1-1 to 1-9 was measured by a MOCON method. As measurement conditions, the temperature was set to 40°C, and the relative humidity was set to 90%. A crease parallel to the MD direction was formed in the gas barrier laminate while a 1500 g roller was rotated at a rate of 300 mm/minute, and the water vapor permeability of the opened gas barrier laminate was also measured in the same manner. "Inward fold" in Table 1 and Table 2 means a gas barrier laminate in which a mountain-fold was applied to the gas barrier laminate when viewed from the paper base material side, and "outward fold" indicates a gas barrier laminate in which a valley-fold was applied to the gas barrier laminate when viewed from the paper base material side. The results were entered in Table 1 and Table 2 in the unit of [g/m$^2$·day].

[Table 1]

| | | Example 1-1 | Example 1-2 | Example 1-3 | Example 1-4 | Example 1-5 | Example 1-6 | Example 1-7 | Example 1-8 | Example 1-9 |
|---|---|---|---|---|---|---|---|---|---|---|
| Laminate | Paper base material (basis weight) | SPECIAL CORMORANT from Fujikako Co., Ltd. (52.3 g/m$^2$) | SPECIAL CORMO S from Fujikako Co., Ltd. (52.3 g/m$^2$) | RYUUO COATE from Daio Paper Corporation (55 g/m$^2$) | Coated wrapping paper from Xianhe Co., Ltd. (50 g/m$^2$) | Coated wrapping paper from Xianhe Co., Ltd. (60 g/m$^2$) | Coated wrapping paper from Xianhe Co., Ltd. (60 g/m$^2$) | Coated wrapping paper from Xianhe Co., Ltd. (60 g/m$^2$) | Coated wrapping paper from Xianhe Co., Ltd. (60 g/m$^2$) | RYUUO COATE from Daio Paper Corporation (55 g/m$^2$) |
| | First resin layer | Polar group-containing polyolefin | Polar group-containing polyolefin | Polar group-containing polyolefin | Polar group-containing polyolefin | Polar group-containing polyolefin | Polar group-containing polyolefin | Polar group-containing polyolefin | PVA | PVA |
| | Vapor-deposited layer (thickness) | AL (50 nm) | AL (50 nm) | AL (50 nm) | AL (50 nm) | AL (50 nm) | Silica (50 nm) | Alumina (50 nm) | AL (50 nm) | AL (50 nm) |
| | Second resin layer (thickness) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) |
| Physical properties of paper base material | Thickness | 52 μm | 49 μm | 45 μm | 41 μm | 51 μm | 51 μm | 51 μm | 51 μm | 45 μm |
| | Density [g/cm$^3$] | 1.00 | 1.15 | 1.21 | 1.22 | 1.18 | 1.18 | 1.18 | 1.18 | 1.21 |
| | Dimensional change percentage in CD direction | 0.39% | 0.38% | 0.54% | 0.56% | 0.55% | 0.55% | 0.55% | 0.55% | 0.54% |
| Physical properties of laminate | Density [g/cm$^3$] | 0.95 | 1.10 | 1.13 | 1.14 | 1.13 | 1.13 | 1.13 | 1.13 | 1.12 |
| | Dimensional change percentage in CD direction | 0.52% | 0.43% | 0.63% | 0.55% | 0.58% | 0.57% | 0.58% | 0.70% | 0.60% |
| | Water vapor permeability [g/m$^2$·day] — Initial | 1.2 | 0.7 | 1.0 | 0.9 | 0.9 | 1.0 | 0.9 | 1.1 | 1.5 |
| | Water vapor permeability [g/m$^2$·day] — Inward fold | 1.0 | 1.4 | 1.0 | 0.6 | 0.9 | 1.1 | 1.1 | 1.9 | 1.7 |
| | Water vapor permeability [g/m$^2$·day] — Outwar | 1.4 | 1.3 | 1.9 | 1.1 | 1.2 | 1.3 | 1.1 | 2.6 | 2.7 |

EP 4 442 451 A1

| | | d fold | | | | | | | | | |
|---|---|---|---|---|---|---|---|---|---|---|---|

[Table 2]

| | | Comparative Example 1-1 | Comparative Example 1-2 | Comparative Example 1-3 | Comparative Example 1-4 | Comparative Example 1-5 | Comparative Example 1-6 | Comparative Example 1-7 | Comparative Example 1-8 | Comparative Example 1-9 |
|---|---|---|---|---|---|---|---|---|---|---|
| Laminate | Paper base material (basis weight) | GLASSINE N from Nippon Paper Industries Co., Ltd. (30.5 g/m²) | Enza HS Wrapping Paper from APP Group (60 g/m²) | Solide Lucent from UPM (40 g/m²) | Solide Strong from UPM (60 g/m²) | Brilliant Express from UPM (40 g/m²) | Brilliant Duo from UPM (62 g/m²) | Brilliant from UPM (60 g/m²) | Solide Lucent from UPM (40 g/m²) | Brilliant from UPM (60 g/m²) |
| | First resin layer | Polar group-containing polyolefin | Polar group-containing polyolefin | Polar group-containing polyolefin | Polar group-containing polyolefin | Polar group-containing polyolefin | Polar group-containing polyolefin | Polar group-containing polyolefin | PVA | PVA |
| | Vapor-deposited layer (thickness) | AL (50 nm) | AL (50 nm) | AL (50 nm) | AL (30 nm) | AL (50 nm) | AL (50 nm) | AL (50 nm) | AL (50 nm) | Silica (50 nm) |
| | Second resin layer (thickness) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) |
| Physical properties of paper base material | Thickness of paper base material | 26 μm | 77 μm | 35 μm | 67 μm | 34 μm | 51 μm | 51 μm | 35 μm | 51 μm |
| | Density [g/cm³] | 1.27 | 0.78 | 1.19 | 0.89 | 1.19 | 1.21 | 1.19 | 1.19 | 1.19 |
| | Dimensional change percentage in CD direction | 1.18% | 0.44% | 1.34% | 0.81% | 1.00% | 1.19% | 0.88% | 1.34% | 0.88% |

(continued)

| | | | Comparative Example 1-1 | Comparative Example 1-2 | Comparative Example 1-3 | Comparative Example 1-4 | Comparative Example 1-5 | Comparative Example 1-6 | Comparative Example 1-7 | Comparative Example 1-8 | Comparative Example 1-9 |
|---|---|---|---|---|---|---|---|---|---|---|---|
| Physical properties of laminate | Density [g/cm³] | | 1.22 | 0.83 | 1.11 | 0.89 | 1.11 | 1.18 | 1.17 | 1.11 | 1.17 |
| | Dimensional change percentage in CD direction | | 1.37% | 0.53% | 1.42% | 1.15% | 0.92% | 0.88% | 0.90% | 1.68% | 1.15% |
| | Water vapor | Initial | 11 | 250 | 159 | 701 | 50 | 118 | 49 | 205 | 82 |
| | | Inward | 12 | 252 | 154 | 710 | 85 | 117 | 49 | 208 | 90 |

| | | fold | | | | | | | | | |
|---|---|---|---|---|---|---|---|---|---|---|---|
| permeabili ty [g/m$^2$·day] | | Outwar d fold | 14 | 248 | 159 | 692 | 83 | 116 | 55 | 211 | 93 |

As shown in Table 1 and Table 2, the gas barrier laminates according to Examples 1-1 to 1-9 had a water vapor permeability of 10 g/m$^2$·day or lower, which was favorable, not only in the initial phase but also after the gas barrier laminate was folded. According to the gas barrier laminate of the present disclosure, even in a case where a packaging bag is formed to have a shape with a folded portion, it is possible to suppress deterioration of a content for a long period of time.

<Production of gas barrier laminate according to second aspect>

(Example 2-1)

A water dispersion of a polyolefin containing a salt of a carboxyl group was applied (wet application amount: 15 g/m$^2$, solid content concentration: 20 mass%) with a bar coater onto a surface of a paper base material (manufactured by Fujikako Co., Ltd., trade name: SPECIAL CORMORANT, thickness: 52 $\mu$m, basis weight: 52.3 g/m$^2$) and dried in an oven to form a first resin layer. Subsequently, Al vapor deposition was performed on the first resin layer by a vacuum vapor deposition method to form an Al vapor-deposited layer. The thickness of the Al vapor-deposited layer was 50 nm. After that, a water dispersion of a polyolefin containing a salt of a carboxyl group was applied with the bar coater onto the vapor-deposited layer and dried in the oven to form a second resin layer, whereby a gas barrier laminate was obtained. The thickness of the second resin layer was 3 $\mu$m.

(Example 2-2)

A gas barrier laminate was obtained by the same operation as in Example 2-1 except that SPECIAL CORMO S (trade name, thickness: 49 $\mu$m, basis weight: 52.3 g/m$^2$) manufactured by Fujikako Co., Ltd. was used as the paper base material.

(Example 2-3)

A gas barrier laminate was obtained by the same operation as in Example 2-1 except that RYUUO COATE (trade name, thickness: 45 $\mu$m, basis weight: 55 g/m$^2$) manufactured by Daio Paper Corporation was used as the paper base material.

(Example 2-4)

A gas barrier laminate was obtained by the same operation as in Example 2-1 except that a coated wrapping paper (thickness: 41 $\mu$m, basis weight: 50 g/m$^2$) manufactured by Xianhe Co., Ltd. was used as the paper base material.

(Example 2-5)

A gas barrier laminate was obtained by the same operation as in Example 2-1 except that a coated wrapping paper (thickness: 51 $\mu$m, basis weight: 60 g/m$^2$) manufactured by Xianhe Co., Ltd. was used as the paper base material.

(Example 2-6)

A gas barrier laminate was obtained by the same operation as in Example 2-1 except that a coated wrapping paper (thickness: 51 $\mu$m, basis weight: 60 g/m$^2$) manufactured by Xianhe Co., Ltd. was used as the paper base material and a silica vapor-deposited layer was formed by the vacuum vapor deposition method as the vapor-deposited layer.

(Example 2-7)

A gas barrier laminate was obtained by the same operation as in Example 2-1 except that a coated wrapping paper (thickness: 51 $\mu$m, basis weight: 60 g/m$^2$) manufactured by Xianhe Co., Ltd. was used as the paper base material and an alumina vapor-deposited layer was formed by the vacuum vapor deposition method as the vapor-deposited layer.

(Example 2-8)

A gas barrier laminate was obtained by the same operation as in Example 2-1 except that a coated wrapping paper (thickness: 51 $\mu$m, basis weight: 60 g/m$^2$) manufactured by Xianhe Co., Ltd. was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

(Example 2-9)

A gas barrier laminate was obtained by the same operation as in Example 2-1 except that RYUUO COATE (trade name, thickness: 45 $\mu$m, basis weight: 55 g/m$^2$) manufactured by Daio Paper Corporation was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

(Comparative Example 2-1)

A gas barrier laminate was obtained by the same operation as in Example 2-1 except that GLASSINE N (trade name, thickness: 26 $\mu$m, basis weight: 30.5 g/m$^2$) manufactured by Nippon Paper Industries Co., Ltd. was used as the paper base material.

(Comparative Example 2-2)

A gas barrier laminate was obtained by the same operation as in Example 2-1 except that Enza HS Wrapping Paper (trade name, thickness: 77 $\mu$m, basis weight: 60 g/m$^2$) manufactured by APP Group was used as the paper base material.

(Comparative Example 2-3)

A gas barrier laminate was obtained by the same operation as in Example 2-1 except that Solide Lucent (trade name, thickness: 35 $\mu$m, basis weight: 40 g/m$^2$) manufactured by UPM was used as the paper base material.

(Comparative Example 2-4)

A gas barrier laminate was obtained by the same operation as in Example 2-1 except that Solide Strong (trade name, thickness: 67 $\mu$m, basis weight: 60 g/m$^2$) manufactured by UPM was used as the paper base material.

(Comparative Example 2-5)

A gas barrier laminate was obtained by the same operation as in Example 2-1 except that Brilliant Express (trade name, thickness: 34 $\mu$m, basis weight: 40 g/m$^2$) manufactured by UPM was used as the paper base material.

(Comparative Example 2-6)

A gas barrier laminate was obtained by the same operation as in Example 2-1 except that Brilliant Duo (trade name, thickness: 51 $\mu$m, basis weight: 62 g/m$^2$) manufactured by UPM was used as the paper base material.

(Comparative Example 2-7)

A gas barrier laminate was obtained by the same operation as in Example 2-1 except that Brilliant (trade name, thickness: 51 $\mu$m, basis weight: 60 g/m$^2$) manufactured by UPM was used as the paper base material.

(Comparative Example 2-8)

A gas barrier laminate was obtained by the same operation as in Example 2-1 except that Solide Lucent (trade name, thickness: 35 $\mu$m, basis weight: 40 g/m$^2$) manufactured by UPM was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

(Comparative Example 2-9)

A gas barrier laminate was obtained by the same operation as in Example 2-1 except that Brilliant (thickness: 51 μm, basis weight: 60 g/m$^2$) manufactured by UPM was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

(Comparative Example 2-10)

A gas barrier laminate was obtained by the same operation as in Example 2-1 except that Flex Pack (thickness: 50 μm, basis weight: 60 g/m$^2$) manufactured by UPM was used as the paper base material and a first resin layer was formed by applying a coating liquid containing a polyvinyl alcohol resin having a degree of polymerization of 500 (wet application amount: 30 g/m$^2$, solid content concentration: 10 mass%) with the bar coater and drying the coating liquid in the oven.

<Film thickness measurement of clay coat layers>

Cross sections of the gas barrier laminates according to Examples 2-1 to 2-9 and Comparative Examples 2-1 to 2-10 were observed with SEM, the thicknesses of the clay coat layers were measured every 50 μm width, and the average values of 40 places were regarded as the clay coat thicknesses. Paper base materials for which the thickness of the clay coat layer is 0 μm are paper base materials having no clay coat layers. The results are shown in Table 3 and Table 4.

<Measurement of dimensional change percentage>

The dimensional change percentages of the gas barrier laminates according to Examples 2-1 to 2-9 and Comparative Examples 2-1 to 2-10 and the paper base materials used in Examples 2-1 to 2-9 and Comparative Examples 2-1 to 2-10 were measured by the same method as for the dimensional change percentages of the gas barrier laminates and the paper base materials of Example 1-1 and the like. The results are shown in Table 3 and Table 4.

<Measurement of water vapor permeability>

The water vapor permeability of the gas barrier laminates according to Examples 2-1 to 2-9 and Comparative Examples 2-1 to 2-10 was measured by the same method as for the water vapor permeability of the gas barrier laminates of Example 1-1 and the like. The results are shown in Table 3 and Table 4.

[Table 3]

| | | Example 2-1 | Example 2-2 | Example 2-3 | Example 2-4 | Example 2-5 | Example 2-6 | Example 2-7 | Example 2-8 | Example 2-9 |
|---|---|---|---|---|---|---|---|---|---|---|
| Laminate | Paper base material (basis weight) | SPECIAL CORMORANT from Fujikako Co., Ltd. (52.3 g/m$^2$) | SPECIAL CORMO S from Fujikako Co., Ltd. (52.3 g/m$^2$) | RYUUO COATE from Daio Paper Corporation (55 g/m$^2$) | Coated wrapping paper from Xianhe Co., Ltd. (50 g/m$^2$) | Coated wrapping paper from Xianhe Co., Ltd. (60 g/m$^2$) | Coated wrapping paper from Xianhe Co., Ltd. (60 g/m$^2$) | Coated wrapping paper from Xianhe Co., Ltd. (60 g/m$^2$) | Coated wrapping paper from Xianhe Co., Ltd. (60 g/m$^2$) | RYUUO COATE from Daio Paper Corporation (55 g/m$^2$) |
| | Thickness of clay coat layer | 1.9 μm | 6.3 μm | 5.9 μm | 6.2 μm | 8.1 μm | 8.1 μm | 8.1 μm | 8.1 μm | 5.9 μm |
| | First resin layer | Polar group-containing polyolefin | Polar group-containing polyolefin | Polar group-containing polyolefin | Polar group-containing polyolefin | Polar group-containing polyolefin | Polar group-containing polyolefin | Polar group-containing polyolefin | PVA | PVA |
| | Vapor-deposited layer (thickness) | AL (50 nm) | AL (50 nm) | AL (50 nm) | AL (50 nm) | AL (50 nm) | Silica (50 nm) | Alumina (50 nm) | AL (50 nm) | AL (50 nm) |
| | Second resin layer (thickness) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) |
| Physical properties of paper base material | Thickness | 52 μm | 49 μm | 45 μm | 41 μm | 51 μm | 51 μm | 51 μm | 51 μm | 45 μm |
| | Dimensional change percentage in CD direction | 0.39% | 0.38% | 0.54% | 0.56% | 0.55% | 0.55% | 0.55% | 0.55% | 0.54% |
| Physical properties of laminate | Dimensional change percentage in CD direction | 0.52% | 0.43% | 0.63% | 0.55% | 0.58% | 0.57% | 0.58% | 0.70% | 0.60% |
| | Water vapor permeabili · Initial | 1.2 | 0.7 | 1.0 | 0.9 | 0.9 | 1.0 | 0.9 | 1.1 | 1.5 |
| | Water vapor permeabili · Inward fold | 1.0 | 1.4 | 1.0 | 0.6 | 0.9 | 1.1 | 1.1 | 1.9 | 1.7 |

| | ty [g/m$^2$·day] | Outwar d fold | 1.4 | 1.3 | 1.9 | 1.1 | 1.2 | 1.3 | 1.1 | 2.6 | 2.7 |
|---|---|---|---|---|---|---|---|---|---|---|---|

[Table 4]

| | | Comparative Example 2-1 | Comparative Example 2-2 | Comparative Example 2-3 | Comparative Example 2-4 | Comparative Example 2-5 | Comparative Example 2-6 | Comparative Example 2-7 | Comparative Example 2-8 | Comparative Example 2-9 | Comparative Example 2-10 |
|---|---|---|---|---|---|---|---|---|---|---|---|
| Laminate | Paper base material (basis weight) | GLASSINE N from Nippon Paper Industries Co., Ltd. (30.5 g/m²) | Enza HS Wrapping Paper from APP Group (60 g/m²) | Solide Lucent from UPM (40 g/m²) | Solide Strong from UPM (60 g/m²) | Brilliant Express from UPM (40 g/m²) | Brilliant Duo from UPM (62 g/m²) | Brilliant from UPM (60 g/m²) | Solide Lucent from UPM (40 g/m²) | Brilliant from UPM (60 g/m²) | Flex Pack from UPM (60 g/m²) |
| | Thickness of clay coat layer | 0 μm | 0 μm | 0 μm | 0 μm | 0.5 μm | 0.7 μm | 0.7 μm | 0 μm | 0.7 μm | 9.9 μm |
| | First resin layer | Polar group-contai ning polyolefin | Polar group-contai ning polyolefin | Polar group-contai ning polyolefin | Polar group-contai ning polyolefin | Polar group-contai ning polyolefin | Polar group-contai ning polyolefin | Polar group-contai ning polyolefin | PVA | PVA | PVA |
| | Vapor-deposited layer (thickness) | AL (50 nm) | AL (50 nm) | AL (50 nm) | AL (30 nm) | AL (50 nm) | AL (50 nm) | AL (50 nm) | AL (50 nm) | Silica (50 nm) | AL (50 nm) |
| | Second resin layer (thickness) | Polar group-contai ning polyolefin (3 μm) | Polar group-contai ning polyolefin (3 μm) | Polar group-contai ning polyolefin (3 μm) | Polar group-contai ning polyolefin (3 μm) | Polar group-contai ning polyolefin (3 μm) | Polar group-contai ning polyolefin (3 μm) | Polar group-contai ning polyolefin (3 μm) | Polar group-contai ning polyolefin (3 μm) | Polar group-contai ning polyolefin (3 μm) | Polar group-contai ning polyolefin (3 μm) |
| Physical properties of paper | Thickness | 26 μm | 77 μm | 35 μm | 67 μm | 34 μm | 51 μm | 51 μm | 35 μm | 51 μm | 50 μm |
| | Dimensional change percentage in CD direction | 1.18% | 0.44% | 1.34% | 0.81% | 1.00% | 1.19% | 0.88% | 1.34% | 0.88% | 1.10% |

| base material | | | | | | | | | | | | |
|---|---|---|---|---|---|---|---|---|---|---|---|---|
| Physical properties of laminate | Dimensional change percentage in CD direction | | 1.37% | 0.53% | 1.42% | 1.15% | 0.92% | 0.88% | 0.90% | 1.68% | 1.15% | 0.95% |
| | Water vapor permeability [g/m²·day] | Initial | 11 | 250 | 159 | 701 | 50 | 118 | 49 | 205 | 82 | 7 |
| | | Inward fold | 12 | 252 | 154 | 710 | 85 | 117 | 49 | 208 | 90 | 8 |
| | | Outward fold | 14 | 248 | 159 | 692 | 83 | 116 | 55 | 211 | 93 | 23 |

As shown in Table 3 and Table 4, the gas barrier laminates according to Examples 2-1 to 2-9 had a water vapor permeability of 10 g/m²·day or lower, which was favorable, not only in the initial phase but also after the gas barrier laminate was folded. According to the gas barrier laminate of the present disclosure, even in a case where a packaging bag is formed to have a shape with a folded portion, it is possible to suppress deterioration of a content for a long period of time.

<Production of gas barrier laminates according to third aspect, fourth aspect and fifth aspect>

(Example 3-1)

A water dispersion of a polyolefin containing a salt of a carboxyl group (solid content concentration: 20 mass%) was applied (wet application amount: 20 g/m², coating rate: 20 m/min., unfold tension per unit width: 75 N/m, drying tension per unit width: 100 N/m) with a gravure coater onto a surface of a paper base material (manufactured by Fujikako Co., Ltd., trade name: SPECIAL CORMO S, thickness: 49 $\mu$m, basis weight: 52.3 g/m², clay coat layer provided) and dried (heat-label temperature: 99°C) in an oven to form a first resin layer (thickness: 3 $\mu$m). Subsequently, an Al vapor-deposited layer (thickness: 50 nm) was formed on the first resin layer by a vacuum vapor deposition method, whereby a gas barrier laminate was obtained.

(Example 3-2)

A gas barrier laminate was obtained by the same operation as in Example 3-1 except that RYUUO COATE (trade name, thickness: 45 $\mu$m, basis weight: 55 g/m², clay coat layer provided) manufactured by Daio Paper Corporation was used as the paper base material.

(Example 3-3)

A gas barrier laminate was obtained by the same operation as in Example 3-1 except that a coated wrapping paper (thickness: 51 $\mu$m, basis weight: 60 g/m², clay coat layer provided) manufactured by Xianhe Co., Ltd. was used as the paper base material.

(Example 3-4)

A gas barrier laminate was obtained by the same operation as in Example 3-1 except that Carcoat (trade name, thickness: 52 $\mu$m, basis weight: 60 g/m², clay coat layer provided) manufactured by Sappi was used as the paper base material.

(Example 3-5)

A gas barrier laminate was obtained by the same operation as in Example 3-1 except that a silica vapor-deposited layer (thickness: 50 nm) was formed by the vacuum vapor deposition method as the vapor-deposited layer.

(Example 3-6)

A gas barrier laminate was obtained by the same operation as in Example 3-1 except that a first resin layer (thickness: 3 $\mu$m) was formed by applying an aqueous solution containing a polyvinyl alcohol resin having a degree of polymerization of 500 (solid content concentration: 10 mass%) (wet application amount: 30 g/m$^2$, coating rate: 20 m/min., unfold tension per unit width: 75 N/m, drying tension per unit width: 100 N/m) with the gravure coater and drying the aqueous solution (heat-label temperature: 99°C) in the oven.

(Example 3-7)

A gas barrier laminate was obtained by the same operation as in Example 3-6 except that RYUUO COATE (trade name, thickness: 45 $\mu$m, basis weight: 55 g/m$^2$, clay coat layer provided) manufactured by Daio Paper Corporation was used as the paper base material.

(Example 3-8)

A gas barrier laminate was obtained by the same operation as in Example 3-6 except that a coated wrapping paper (thickness: 51 $\mu$m, basis weight: 60 g/m$^2$, clay coat layer provided) manufactured by Xianhe Co., Ltd. was used as the paper base material.

(Example 3-9)

A gas barrier laminate was obtained by the same operation as in Example 3-1 except that a first resin layer was formed on the vapor-deposited layer in a thickness of 8 $\mu$m by applying an aqueous solution containing a polyvinyl alcohol resin having a degree of polymerization of 500 (solid content concentration: 10 mass%) (wet application amount: 80 g/m$^2$, coating rate: 20 m/min., unfold tension per unit width: 75 N/m, drying tension per unit width: 100 N/m) with the gravure coater and drying the aqueous solution (heat-label temperature: 88°C) in the oven.

(Example 3-10)

A gas barrier laminate was obtained by the same operation as in Example 3-1 except that a second resin layer (thickness: 3 $\mu$m) was formed by applying a water dispersion of a polyolefin containing a salt of a carboxyl group (solid content concentration: 15 mass%) (wet application amount: 20 g/m$^2$, coating rate: 20 m/min., unfold tension per unit width: 75 N/m, drying tension per unit width: 100 N/m) with the gravure coater and drying the water dispersion (heat-label temperature: 104°C) in the oven.

(Example 3-11)

A gas barrier laminate was obtained by the same operation as in Example 3-10 except that RYUUO COATE (trade name, thickness: 45 $\mu$m, basis weight: 55 g/m$^2$, clay coat layer provided) manufactured by Daio Paper Corporation was used as the paper base material.

(Example 3-12)

A gas barrier laminate was obtained by the same operation as in Example 3-10 except that a coated wrapping paper (thickness: 51 $\mu$m, basis weight: 60 g/m$^2$, clay coat layer provided) manufactured by Xianhe Co., Ltd. was used as the paper base material.

(Example 3-13)

A gas barrier laminate was obtained by the same operation as in Example 3-10 except that a first resin layer (thickness: 3 $\mu$m) was formed by applying an aqueous solution containing a polyvinyl alcohol resin having a degree of polymerization of 500 (solid content concentration: 10 mass%) (wet application amount: 30 g/m$^2$, coating rate: 20 m/min., unfold tension per unit width: 75 N/m, drying tension per unit width: 100 N/m) with the gravure coater and drying the aqueous solution (heat-label temperature: 99°C) in the oven.

(Example 3-14)

A gas barrier laminate was obtained by the same operation as in Example 3-13 except that RYUUO COATE (trade name, thickness: 45 μm, basis weight: 55 g/m$^2$, clay coat layer provided) manufactured by Daio Paper Corporation was used as the paper base material.

(Example 3-15)

A gas barrier laminate was obtained by the same operation as in Example 3-13 except that a coated wrapping paper (thickness: 51 μm, basis weight: 60 g/m$^2$, clay coat layer provided) manufactured by Xianhe Co., Ltd. was used as the paper base material.

(Comparative Example 3-1)

A gas barrier laminate was obtained by the same operation as in Example 3-1 except that Hi-Fi Kraft Lux (trade name, thickness: 53 μm, basis weight: 60 g/m$^2$, clay coat layer provided) manufactured by Sappi was used as the paper base material.

(Comparative Example 3-2)

A gas barrier laminate was obtained by the same operation as in Example 3-1 except that Leine Kraft LK (trade name, thickness: 47 μm, basis weight: 40 g/m$^2$, no clay coat layer provided) manufactured by Sappi was used as the paper base material.

(Comparative Example 3-3)

A gas barrier laminate was obtained by the same operation as in Example 3-1 except that Solide Lucent (trade name, thickness: 35 μm, basis weight: 40 g/m$^2$, no clay coat layer provided) manufactured by UPM was used as the paper base material.

(Comparative Example 3-4)

A gas barrier laminate was obtained by the same operation as in Example 3-6 except that Hi-Fi Kraft Lux (trade name, thickness: 53 μm, basis weight: 60 g/m$^2$, clay coat layer provided) manufactured by Sappi was used as the paper base material.

(Comparative Example 3-5)

A gas barrier laminate was obtained by the same operation as in Example 3-6 except that Flex Pack (trade name, thickness: 50 μm, basis weight: 60 g/m$^2$, clay coat layer provided) manufactured by UPM was used as the paper base material.

(Comparative Example 3-6)

A gas barrier laminate was obtained by the same operation as in Example 3-6 except that Solide Lucent (trade name, thickness: 35 μm, basis weight: 40 g/m$^2$, no clay coat layer provided) manufactured by UPM was used as the paper base material.

(Comparative Example 3-7)

A gas barrier laminate was obtained by the same operation as in Example 3-6 except that Solide Strong (trade name, thickness: 67 μm, basis weight: 60 g/m$^2$, no clay coat layer provided) manufactured by UPM was used as the paper base material.

(Comparative Example 3-8)

A gas barrier laminate was obtained by the same operation as in Example 3-13 except that Flex Pack (trade name, thickness: 50 μm, basis weight: 60 g/m$^2$, clay coat layer provided) manufactured by UPM was used as the paper base material.

(Comparative Example 3-9)

A gas barrier laminate was obtained by the same operation as in Example 3-13 except that Solide Lucent (trade name, thickness: 35 $\mu$m, basis weight: 40 g/m$^2$, no clay coat layer provided) manufactured by UPM was used as the paper base material.

(Comparative Example 3-10)

A gas barrier laminate was obtained by the same operation as in Example 3-13 except that Solide Strong (trade name, thickness: 67 $\mu$m, basis weight: 60 g/m$^2$, no clay coat layer provided) manufactured by UPM was used as the paper base material.

<Measurement of underwater elongation>

For the paper base materials used in Examples 3-1 to 3-15 and Comparative Examples 3-1 to 3-10, the underwater elongations in the MD direction and the CD direction were measured by the following procedure. First, a test piece cut out to size that was 150 mm in length and 20 mm in width such that the MD direction became the longitudinal direction (test piece for underwater elongation measurement in MD direction) and a test piece cut out to size that was 150 mm in length and 20 mm in width such that the CD direction became the longitudinal direction (test piece for underwater elongation measurement in CD direction) were each produced from each paper base material. This test piece was left to stand in a constant temperature and humidity chamber of 23°C and 50%RH for three days. After that, the length of the test piece was measured in the constant temperature and humidity chamber using a glass scale. This length was regarded as the initial length "L1" (unit: mm). Subsequently, the paper base material after the measurement of the length was removed from the constant temperature and humidity chamber, immersed in water and left to stand for five minutes. The immersed test piece was removed from water, excess water attached to the test piece was lightly absorbed with KIM TOWEL (manufactured by Nippon Paper Crecia Co., Ltd.), and the length of the test piece was measured using the glass scale. This length was regarded as the length after being left to stand in water "L2" (unit: mm). The time taken from the removal from water to the measurement of the length was set to 10 seconds to 20 seconds. The underwater elongation (%) was calculated from the following expression.

$$\text{Underwater elongation } (\%) = (L2 - L1)/L1 \times 100$$

In each of the MD direction and the CD direction, the lengths were measured from five test pieces, and the average value thereof was obtained as the underwater elongation in the MD direction or the underwater elongation in the CD direction. The results are shown in Table 5 to Table 8.

Regarding the gas barrier laminates obtained in Examples 3-1 to 3-15 and Comparative Examples 3-1 to 3-10, the underwater elongation of the gas barrier laminate was measured by the same method as for the underwater elongation of the paper base material. The results are shown in Table 5 to Table 8.

<Determination of tearing of paper>

In a step of applying a coating fluid for forming the first resin layer onto the paper base material, in a case where the paper base material was completely cut even once during the application of the coating fluid to a length of 50 m, the paper was determined to be torn. The width of the paper base material during the application was 520 mm. A case where the paper did not tear was evaluated as "A", and a case where the paper tore was evaluated as "B." The results are shown in Table 5 to Table 8.

<Measurement of water vapor permeability>

Regarding the gas barrier laminates obtained in Examples 3-1 to 3-15 and Comparative Examples 3-1 to 3-10, the water vapor permeability (g/m$^2$·day) under an atmosphere of 40°C and 90%RH was measured using a water vapor permeability measuring instrument (manufactured by AMETEK MOCON, trade name: PERMATRAN 3/34G) according to JIS K 7129. The results are shown in Table 5 to Table 8.

<Measurement of oxygen permeability>

Regarding the gas barrier laminates obtained in Examples 3-6 to 3-9 and 3-13 to 3-15 and Comparative Examples 3-4 to 3-10 (the gas barrier laminates including the first resin layer containing polyvinyl alcohol (PVA)), the oxygen permeability (cc/m$^2$·day·atm) under an atmosphere of 30°C and 70%RH was measured using an oxygen permeability measuring instrument (manufactured by AMETEK MOCON, trade name: OX-TRAN 2/20) according to JIS K 7126-2 (equal-pressure method). The results are shown in Table 6 and Table 8.

Table 5]

| | | | Example 3-1 | Example 3-2 | Example 3-3 | Example 3-4 | Example 3-5 | Comparative Example 3-1 | Comparative Example 3-2 | Comparative Example 3-3 |
|---|---|---|---|---|---|---|---|---|---|---|
| Laminate | Paper base material (basis weight) | | SPECIAL CORMO S from Fujikako Co., Ltd. (52.3 g/m²) | RYUUO COATE from Daio Paper Corporation (55 g/m²) | Coated wrapping paper from Xianhe Co., Ltd. (60 g/m²) | Carcoat from Sappi (60 g/m²) | SPECIAL CORMO S from Fujikako Co., Ltd. (52.3 g/m²) | Hi-Fi Kraft Lux from Sappi (60 g/m²) | Leine Kraft LK from Sappi (40 g/m²) | Solide Lucent from UPM (40 g/m²) |
| | First resin layer (thickness) | | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) | Polar group-containing polyolefin (3 μm) |
| | Vapor-deposited layer (thickness) | | AL (50 nm) | AL (50 nm) | AL (50 nm) | AL (50 nm) | Silica (50 nm) | AL (50 nm) | AL (50 nm) | AL (50 nm) |
| | Second resin layer (thickness) | | Absent | Absent | Absent | Absent | Absent | Absent | Absent | Absent |
| Physical properties of paper base material | Underwater elongation | MD direction | 0.10% | -0.03% | -0.17% | 0.22% | 0.10% | 0.71% | 0.70% | -0.19% |
| | | CD direction | 0.78% | 1.83% | 1.75% | 2.65% | 0.78% | 1.66% | 0.86% | 5.17% |
| Process aptitude | Presence or absence of paper tearing | | A | A | A | A | A | B | B | A |
| Physical properties of laminate | Underwater elongation | MD direction | 0.08% | 0.01% | -0.08% | 0.02% | 0.06% | 0.66% | 0.65% | -0.01% |
| | | CD direction | 0.88% | 1.72% | 1.39% | 2.01% | 0.97% | 1.10% | 0.81% | 3.47% |
| | Water vapor permeability [g/m²·day] | | 5 | 7 | 6 | 8 | 8 | 7 | 9 | 20 |

[Table 6]

| | | | Example 3-6 | Example 3-7 | Example 3-8 | Example 3-9 | Comparative Example 3-4 | Comparative Example 3-5 | Comparative Example 3-6 | Comparative Example 3-7 |
|---|---|---|---|---|---|---|---|---|---|---|
| Laminate | Paper base material (basis weight) | | SPECIAL CORMO S from Fujikako Co., Ltd. (52.3 g/m$^2$) | RYUUO COATE from Daio Paper Corporation (55 g/m$^2$) | Coated wrapping paper from Xianhe Co., Ltd. (60 g/m$^2$) | SPECIAL CORMO S from Fujikako Co., Ltd. (52.3 g/m$^2$) | Hi-Fi Kraft Lux from Sappi (60 g/m$^2$) | Flex Pack from UPM (60 g/m$^2$) | Solide Lucent from UPM (40 g/m$^2$) | Solide Strong from UPM (60 g/m$^2$) |
| | First resin layer (thickness) | | PVA (3 $\mu$m) | PVA (3 $\mu$m) | PVA (3 $\mu$m) | PVA (8 $\mu$m) | PVA (3 $\mu$m) | PVA (3 $\mu$m) | PVA (3 $\mu$m) | PVA (3 $\mu$m) |
| | Vapor-deposited layer (thickness) | | AL (50 nm) | AL (50 nm) | AL (50 nm) | AL (50 nm) | AL (50 nm) | AL (50 nm) | AL (50 nm) | AL (50 nm) |
| | Second resin layer (thickness) | | Absent | Absent | Absent | Absent | Absent | Absent | Absent | Absent |
| Physical properties of paper base material | Underwater elongation | MD direction | 0.10% | -0.03% | -0.17% | 0.10% | 0.71% | -0.22% | -0.19% | -0.24% |
| | | CD direction | 0.78% | 1.83% | 1.75% | 0.78% | 1.66% | 4.59% | 5.17% | 3.32% |
| Process aptitude | Presence or absence of paper tearing | | A | A | A | A | B | A | A | A |
| Physical properties of laminate | Underwater elongation | MD direction | 0.09% | -0.08% | -0.04% | 0.08% | 0.86% | 0.23% | -0.18% | -0.12% |
| | | CD direction | 1.14% | 2.35% | 1.96% | 1.21% | 2.02% | 4.09% | 5.30% | 4.52% |
| | Water vapor permeability [g/m$^2$·day] | | 15 | 24 | 20 | 21 | 30 | 70 | 81 | 55 |
| | Oxygen permeability [cc/m$^2$·day·atm] | | 9 | 9 | 8 | 6 | 10 | 10 | 10 | 10 |

[Table 7]

| | | Example 3-10 | Example 3-11 | Example 3-12 |
|---|---|---|---|---|
| Laminate | Paper base material | SPECIAL | RYUUO | Coated wrapping |

| | | | Example 3-10 | Example 3-11 | Example 3-12 |
|---|---|---|---|---|---|
| | (basis weight) | | CORMO S from Fujikako Co., Ltd. (52.3 g/m$^2$) | COATE from Daio Paper Corporation (55 g/m$^2$) | paper from Xianhe Co., Ltd. (60 g/m$^2$) |
| | First resin layer (thickness) | | Polar group-containing polyolefin (3 $\mu$m) | Polar group-containing polyolefin (3 $\mu$m) | Polar group-containing polyolefin (3 $\mu$m) |
| | Vapor-deposited layer (thickness) | | AL (50 nm) | AL (50 nm) | AL (50 nm) |
| | Second resin layer (thickness) | | Polar group-containing polyolefin (3 $\mu$m) | Polar group-containing polyolefin (3 $\mu$m) | Polar group-containing polyolefin (3 $\mu$m) |
| Physical properties of paper base material | Underwater elongation | MD direction | 0.10% | -0.03% | -0.17% |
| | | CD direction | 0.78% | 1.83% | 1.75% |
| Process aptitude | Presence or absence of paper tearing | | A | A | A |
| Physical properties of laminate | Underwater elongation | MD direction | 0.12% | 0.05% | -0.07% |
| | | CD direction | 0.85% | 1.25% | 1.12% |
| | Water vapor permeability [g/m$^2$·day] | | 1 | 1 | 1 |

[Table 8]

| | Example 3-13 | Example 3-14 | Example 3-15 | Comparative Example 3-8 | Comparative Example 3-9 | Comparative Example 3-10 |
|---|---|---|---|---|---|---|

| Laminate | Paper base material (basis weight) | | SPECIAL CORMO S from Fujikako Co., Ltd. (52.3 g/m$^2$) | RYUUO COATE from Daio Paper Corporation (55 g/m$^2$) | Coated wrapping paper from Xianhe Co., Ltd. (60 g/m$^2$) | Flex Pack from UPM (60 g/m$^2$) | Solide Lucent from UPM (40 g/m$^2$) | Solide Strong from UPM (60 g/m$^2$) |
|---|---|---|---|---|---|---|---|---|
| | First resin layer (thickness) | | PVA (3 $\mu$m) | PVA (3 $\mu$m) | PVA (3 $\mu$m) | PVA (3 $\mu$m) | PVA (3 $\mu$m) | PVA (3 $\mu$m) |
| | Vapor-deposited layer (thickness) | | AL (50 nm) | AL (50 nm) | AL (50 nm) | AL (50 nm) | AL (50 nm) | AL (50 nm) |
| | Second resin layer (thickness) | | Polar group-containing polyolefin (3 $\mu$m) | Polar group-containing polyolefin (3 $\mu$m) | Polar group-containing polyolefin (3 $\mu$m) | Polar group-containing polyolefin (3 $\mu$m) | Polar group-containing polyolefin (3 $\mu$m) | Polar group-containing polyolefin (3 $\mu$m) |
| Physical properties of paper base material | Underwater elongation | MD direction | 0.10% | -0.03% | -0.17% | -0.22% | -0.19% | -0.24% |
| | | CD direction | 0.78% | 1.83% | 1.75% | 4.59% | 5.17% | 3.32% |
| Process aptitude | Presence or absence of paper tearing | | A | A | A | A | A | A |
| Physical properties of laminate | Underwater elongation | MD direction | 0.08% | 0.02% | 0.00% | 0.27% | 0.02% | -0.13% |
| | | CD direction | 1.02% | 2.25% | 1.90% | 3.10% | 5.40% | 4.80% |
| | Water vapor permeability [g/m$^2$·day] | | 2 | 3 | 2 | 12 | 15 | 11 |
| | Oxygen permeability [cc/m$^2$·day·atm] | | 2 | 2 | 2 | 3 | 3 | 2 |

In Table 5, the gas barrier laminates having a laminate structure of the paper base material/polar group-containing polyolefin (first resin layer)/Al vapor-deposited layer are compared, and the gas barrier laminates having a laminate structure of the paper base material/polar group-containing polyolefin (first resin layer)/SiOx vapor-deposited layer are compared. In Table 6, the gas barrier laminates having a laminate structure of the paper base material/polyvinyl alcohol (first resin layer)/Al vapor-deposited layer are compared. In Table 7, the gas barrier laminates having a laminate structure of the paper base material/polar group-containing polyolefin (first resin layer)/Al vapor-deposited layer/polar group-containing polyolefin (second resin layer)/ are compared. In Table 8, the gas barrier laminates having a laminate structure of the paper base material/polyvinyl alcohol (first resin layer)/Al/polar group-containing polyolefin (second resin layer) are compared.

As is clear from the results shown in Table 5 to Table 8, when the underwater elongation of the paper base material in the MD direction was 0.30% or less, the paper base material did not tear when the first resin layer had been formed by applying the water-based coating fluid onto the paper base material. In addition, when compared with gas barrier laminates having the same laminate structure except the paper base material, it was confirmed that, in the gas barrier laminates in which the underwater elongation of the paper base material in the CD direction was 3.00% or less, it was possible to reduce the water vapor permeability compared with that of the gas barrier laminates in which the underwater elongation of the paper base material in the CD direction was more than 3.00%.

As is clear from the results shown in Table 5 to Table 8, when the underwater elongation of the gas barrier laminate in the MD direction was 0.40% or less, the paper base material did not tear when the first resin layer had been formed by applying the water-based coating fluid onto the paper base material. In addition, when compared with gas barrier laminates having the same laminate structure except the paper base material, it was confirmed that, in the gas barrier laminates having an underwater elongation of 3.00% or less in the CD direction, it was possible to reduce the water vapor permeability compared with the gas barrier laminates having an underwater elongation of more than 3.00%.

1 ⋯ Paper base material, 2 ⋯ first resin layer, 3 ... vapor-deposited layer, 4 ⋯ second resin layer, 5 ⋯ paper layer, 6 ⋯ clay coat layer, 10, 30, 40 ⋯ gas barrier laminate, 20 ⋯ gusset bag, B1, B2 ⋯ folded portion.

**Claims**

1.  A gas barrier laminate comprising:

    a paper base material;
    a first resin layer;
    a vapor-deposited layer; and
    a second resin layer in this order,
    wherein the gas barrier laminate has a density of 0.9 g/cm$^3$ or higher and 1.5 g/cm$^3$ or lower, and
    a dimensional change percentage in a CD direction of a dimension under conditions of 40°C and 90%RH with respect to a dimension under conditions of 40°C and 20%RH of the gas barrier laminate is 0.8% or less.

2.  A gas barrier laminate comprising:

    a paper base material having a clay coat layer;
    a first resin layer;
    a vapor-deposited layer; and
    a second resin layer in this order,
    wherein the clay coat layer has a thickness of 1.5 $\mu$m or more and 15 $\mu$m or less, and
    a dimensional change percentage in a CD direction of a dimension under conditions of 40°C and 90%RH with respect to a dimension under conditions of 40°C and 20%RH of the gas barrier laminate is 0.85% or less.

3.  The gas barrier laminate according to Claim 1 or 2,
    wherein the second resin layer contains a polyolefin having a polar group.

4.  The gas barrier laminate according to any one of Claims 1 to 3,
    wherein the second resin layer has a thickness of 2 $\mu$m or more and 10 $\mu$m or less.

5.  The gas barrier laminate according to any one of Claims 1 to 4,
    wherein the vapor-deposited layer has a thickness of 30 nm or more and 100 nm or less.

6.  The gas barrier laminate according to any one of Claims 1 to 5,
    wherein the gas barrier laminate has a thickness of 20 $\mu$m or more and 100 $\mu$m or less.

7.  A gas barrier laminate comprising at least:

    a paper base material;
    a first resin layer; and
    a vapor-deposited layer in this order,
    wherein the first resin layer contains a water-soluble resin or a water-dispersible resin, and
    the paper base material has an underwater elongation of 0.30% or less in an MD direction and an underwater elongation of 3.00% or less in a CD direction.

8.  The gas barrier laminate according to Claim 7,
    wherein the gas barrier laminate has an underwater elongation of 0.40% or less in the MD direction and an underwater elongation of 3.00% or less in the CD direction.

9.  A gas barrier laminate comprising at least:

    a paper base material;
    a first resin layer; and
    a vapor-deposited layer in this order,

wherein the first resin layer contains a water-soluble resin or a water-dispersible resin, and
the gas barrier laminate has an underwater elongation of 0.40% or less in an MD direction and an underwater elongation of 3.00% or less in a CD direction.

10. The gas barrier laminate according to any one of Claims 7 to 9,
wherein the first resin layer contains a polyolefin having a polar group or polyvinyl alcohol-based resin.

11. The gas barrier laminate according to any one of Claims 7 to 10,
wherein the gas barrier laminate includes a second resin layer on a surface of the vapor-deposited layer opposite to the first resin layer.

12. The gas barrier laminate according to Claim 11,
wherein the second resin layer contains a polyolefin having a polar group.

13. The gas barrier laminate according to Claim 11 or 12,
wherein the gas barrier laminate has an underwater elongation of 0.40% or less in the MD direction and an underwater elongation of 2.80% or less in the CD direction.

14. The gas barrier laminate according to any one of Claims 7 to 13,
wherein the first resin layer has a thickness of 0.3 $\mu$m or more and 10 $\mu$m or less.

15. A method for manufacturing a gas barrier laminate including at least a paper base material, a first resin layer, and a vapor-deposited layer in this order, the method comprising:
a step of using a paper base material having an underwater elongation of 0.30% or less in an MD direction and an underwater elongation of 3.00% or less in a CD direction as the paper base material and applying and drying a water-based coating fluid containing a water-soluble resin or a water-dispersible resin and water onto the paper base material to form the first resin layer.

16. The method for manufacturing a gas barrier laminate according to Claim 15,
wherein the first resin layer contains a polyolefin having a polar group or polyvinyl alcohol-based resin.

17. The method for manufacturing a gas barrier laminate according to Claim 15 or 16,
wherein the gas barrier laminate includes a second resin layer on a surface of the vapor-deposited layer opposite to the first resin layer.

18. The method for manufacturing a gas barrier laminate according to Claim 17,
wherein the second resin layer contains a polyolefin having a polar group.

19. The method for manufacturing a gas barrier laminate according to any one of Claims 15 to 18,
wherein the first resin layer has a thickness of 0.3 $\mu$m or more and 10 $\mu$m or less.

20. A packaging bag comprising:
the gas barrier laminate according to any one of Claims 1 to 14.

21. The packaging bag according to Claim 20 having a folded portion.

## Fig.1

# Fig.2

# Fig.3

*Fig.4*

## INTERNATIONAL SEARCH REPORT

| International application No. |
| --- |
| **PCT/JP2022/045750** |

### A. CLASSIFICATION OF SUBJECT MATTER

*B32B 9/00*(2006.01)i; *B32B 27/10*(2006.01)i; *B32B 27/30*(2006.01)i; *B32B 27/32*(2006.01)i; *B32B 29/00*(2006.01)i; *B32B 29/06*(2006.01)i; *B65D 65/40*(2006.01)i; *D21H 19/08*(2006.01)i; *D21H 19/20*(2006.01)i; *D21H 19/22*(2006.01)i; *D21H 27/30*(2006.01)i

FI:  B32B27/10; B32B9/00 A; B32B27/30 102; B32B27/32 101; B32B29/00; B32B29/06; B65D65/40 D; D21H19/08; D21H19/20 B; D21H19/22; D21H27/30 A

According to International Patent Classification (IPC) or to both national classification and IPC

### B. FIELDS SEARCHED

Minimum documentation searched (classification system followed by classification symbols)

B32B1/00-43/00; B05D1/00-7/26; B65D65/40; D21H19/08; D21H19/20; D21H19/22; D21H27/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 7-223686 A (TOPPAN PRINTING CO LTD) 22 August 1995 (1995-08-22) claims, paragraphs [0008]-[0009], example 2 | 1-21 |
| A | JP 6944023 B1 (TOPPAN PRINTING CO LTD) 06 October 2021 (2021-10-06) claims, paragraphs [0017], [0025], [0034]-[0041], [0047] | 1-21 |
| A | JP 2000-314096 A (OJI PAPER CO LTD) 14 November 2000 (2000-11-14) claims, paragraphs [0001], [0009]-[0011], [0028] | 1-21 |
| A | JP 9-164626 A (TOPPAN PRINTING CO LTD) 24 June 1997 (1997-06-24) claims, paragraphs [0010]-[0011], [0014]-[0015] | 1-21 |
| A | WO 2021/010040 A1 (OJI HOLDINGS CORPORATION) 21 January 2021 (2021-01-21) claims, paragraphs [0034]-[0038], [0042]-[0044], examples 3, 4 | 1-21 |
| A | JP 2009-18525 A (DAIWA CAN CO LTD) 29 January 2009 (2009-01-29) claims, paragraphs [0006], [0009], [0017] | 7-21 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 January 2023** | **31 January 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/045750**

**C.    DOCUMENTS CONSIDERED TO BE RELEVANT**

| Category* | Citation of document, with indication, where appropriate, of the relevant passages | Relevant to claim No. |
|---|---|---|
| P, A | WO 2022/202168 A1 (TOPPAN PRINTING CO LTD) 29 September 2022 (2022-09-29) claims, comparative examples 1, 2 | 1-21 |

Form PCT/ISA/210 (second sheet) (January 2015)

**INTERNATIONAL SEARCH REPORT**

International application No.

**PCT/JP2022/045750**

| Box No. III | Observations where unity of invention is lacking (Continuation of item 3 of first sheet) |

This International Searching Authority found multiple inventions in this international application, as follows:

(Invention 1) Invention in claims 1-2, invention in claims 3-6, 20-21 referring to any of claims 1-2

(Invention 2) Invention in claims 7, 9, 15, invention in claims 8, 10-14, 16-21 referring to any of claims 7, 9, 15

Claim 1 and claim 2 have the special technical feature of a gas-barrier laminate comprising: a paper base; a first resin layer; a deposition layer; and a second resin layer in this order, and the feature of a dimensional change rate in a CD direction, and are thus classified as invention 1.

The invention in claim 1 shares, with the invention in claims 7, 9, and 15, the common technical feature of a gas-barrier laminate comprising: a paper base; a first resin layer; and a deposition layer in this order. However, said technical feature cannot be said to be the special technical feature due to disclosure in document 1, does not have other identical or corresponding technical features, and thus cannot be classified as invention 1.

Claims 7, 9, and 15 have the special technical feature of a gas-barrier laminate comprising: a paper base; a first resin layer; and a deposition layer in this order, wherein the first resin layer contains a water-soluble resin or a water-dispersible resin, and the feature of an underwater elongation of the paper base or the gas-barrier laminate in an MD direction and in a CD direction, and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2022/045750**

| Patent document cited in search report | | | Publication date (day/month/year) | Patent family member(s) | | | Publication date (day/month/year) |
|---|---|---|---|---|---|---|---|
| JP | 7-223686 | A | 22 August 1995 | (Family: none) | | | |
| JP | 6944023 | B1 | 06 October 2021 | WO | 2022/009608 | A1 | |
| JP | 2000-314096 | A | 14 November 2000 | (Family: none) | | | |
| JP | 9-164626 | A | 24 June 1997 | (Family: none) | | | |
| WO | 2021/010040 | A1 | 21 January 2021 | (Family: none) | | | |
| JP | 2009-18525 | A | 29 January 2009 | (Family: none) | | | |
| WO | 2022/202168 | A1 | 29 September 2022 | (Family: none) | | | |

Form PCT/ISA/210 (patent family annex) (January 2015)

## REFERENCES CITED IN THE DESCRIPTION

**Patent documents cited in the description**

- JP 2020069783 A

- WO 2020203721 A